(19) Europäisches Patentamt

European Patent Office

Office européen des brevets

(11) **EP 4 764 669 A1**

(12) **EUROPEAN PATENT APPLICATION**

(43) Date of publication:
24.06.2026 Bulletin 2026/26

(21) Application number: 24223010.0

(22) Date of filing: 23.12.2024

(51) International Patent Classification (IPC):
*G02C 7/02* (2006.01)    *G02C 7/06* (2006.01)

(52) Cooperative Patent Classification (CPC):
G02C 7/027; G02C 7/025; G02C 7/028;
G02C 7/063; G02C 7/066

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Rodenstock GmbH
80687 München (DE)

(72) Inventor: Muschielok, Adam
83714 Miesbach (DE)

(74) Representative: Müller-Boré & Partner
Patentanwälte PartG mbB
Friedenheimer Brücke 21
80639 München (DE)

(54) **METHOD AND SYSTEM FOR PRODUCING INDIVIDUAL SPECTACLE LENSES AND COMPUTER PROGRAM PRODUCT**

(57) In a method for calculating and/or optimizing and/or producing individual spectacle lenses, a visual scene is shown to a lens wearer. The method further comprises obtaining gaze motion data comprising information about a velocity of an eye direction and/or a velocity of the head of the lens wearer and/or a velocity of a fixation position of the gaze of the lens wearer. The obtained gaze motion data is mapped to a specific lens design for the lens wearer by means of a mapping function. A spectacle lens for the lens wearer is produced according to the specific lens design.

Fig. 4

## Description

The invention relates to a (computer-implemented) method for calculating and/or optimizing and/or producing individual spectacle lenses, to a system for calculating and/or optimizing or producing individual spectacle lenses, and to a computer program product for providing individual lens design data.

Many ways are known to personalise spectacle lenses. They include the selection or calculation of different designs, e.g. of different distributions of residual astigmatism and power addition in progressive addition lenses, dependent on the viewing behaviour of the future wearer or dependent on various physiological features of the wearer. Physiological features known to be used for personalisation of spectacle lenses are for example the position of the eyes, lower and higher order aberrations of the wearer, the visual acuity with correction and, more generally, also as a function of optical blur, etc. The spectacle lens designs can also depend on the viewing task the lenses will be mainly used for (e.g. reading, sports, office work, etc.) or can even depend on a composition of viewing tasks, possibly weighted with the importance of these viewing tasks to the future wearer or the amount of time spent in each viewing task.

Moreover, the lens designs can be determined based on the measurements of the interplay of head and eye motion in particular viewing tasks, for example based on the amplitudes of the deflection of the head and eyes while fixating an excentric target. Such measurements can be done with special measurement devices that display or control the position of the target to be fixated, measure the head deflection or head orientation, or employ eye trackers to measure the fixation direction.

Known measurements of the gaze have at least one of the following disadvantages:

- they are based on the unrealistic assumption of a static gaze behaviour although gaze behaviour is not static;
- they are based on the unrealistic assumption of isotropic gaze behaviour, i.e. that gaze behaviour (as the individual contributions of the eyes and the head) in different gaze directions or the change of gaze in different directions is assumed to be independent on the gaze direction as well as on the direction of change of gaze; and
- they are based on the need to measure the future wearer in the future viewing task the lenses will be used in.

In view of these disadvantages, the invention addresses the problem to provide improved individual spectacle lenses that are better adapted to the actual gaze behaviour of the wearer.

This problem is solved by the subject-matter of the independent claims. Preferred embodiments are the subject-matter of the dependent claims.

## Definitions

In the following, the meaning of some terms used in this document is described.

The terms 'viewing behaviour' and 'gaze behaviour' refer to the entirety of a human observer's movements of the body while the observer looks and possibly also interacts with his visual environment. Particularly, these terms mean the entirety of motions of the head and eyes of the observer over the time of visual interaction with the environment.

The term 'gaze motion behaviour' refers to all non-static gaze behaviour on the time scale of an average fixation duration or longer, for example on the time scale of an average fixation duration during reading of about 0.2 seconds or longer.

The terms 'head-fixed coordinate system', 'torso-fixed coordinate system' and 'world-fixed coordinate system' describe coordinate systems with constant positions and orientations relative to the head of an observer (e.g. a lens wearer), the torso of the observer, and the scene visible to the observer, respectively.

The term 'gaze direction' refers to the direction pointing away from a single eye along the line-of-sight of that eye, or to the average directions pointing away from an eye pair along the lines-of-sight of each eye, in the torso-fixed coordinate system, or in a world-fixed coordinate system. Depending on the context (monocular and/or binocular), 'gaze direction' can refer to the monocular gaze or the binocular gaze. In other words, 'gaze direction' refers to the combined contributions of the eye and the head in a coordinate system external to both, the head and the eyes.

The term 'eye direction' or 'ocular direction' is used to describe the direction pointing away from a single eye along the line-of-sight of that eye, or to the average of the directions pointing away from an eye pair along the lines-of-sight of both eyes in the head-fixed coordinate system.

The term 'head direction' is used to refer to a static direction defined in the head-fixed coordinate system which is parallel to the eye direction when the observer, e.g. a lens wearer, is in a relaxed posture and looks 'straight ahead' at the horizon, i.e. with a minimum of effort in the deflection of the eye direction in both the horizontal and vertical directions. Therefore, if the observer moves the head, then the head direction will change in general when expressed in world coordinates, but it stays constant when expressed in head-fixed coordinates.

The terms 'gaze velocity', 'eye velocity' (also: 'ocular velocity') and 'head velocity' describe the change per unit time of the gaze direction, eye direction, and head direction, respectively. These velocities can be defined, e.g., as angular velocities, that is as time derivatives of the respective directions in their respective coordinate systems. The head velocity can be defined alternatively as the angular velocity of the change of orientation of the head-fixed coordinate system in the torso-fixed coordinate system or the world-fixed coordinate system.

References to the directions 'left', 'right', 'up' and 'down' will be made from the point of view of the observer.

The terms 'lens wearer', 'wearer' and 'observer' are used synonymously to refer to a person requiring spectacle lenses. However, the person is not required to indeed wear spectacle lenses in the context (e.g. the time or situation) the person is referred to, the person may just generally require spectacle lenses.

An aspect relates to a (computer-implemented) method for calculating and/or optimizing individual spectacles lenses, specifically for the purpose of producing the spectacle lenes. In particular, the method may relate to producing individual spectacle lenses, comprising the steps:

- showing a visual scene to a lens wearer;
- obtaining gaze motion data comprising information about a velocity of an eye direction and/or a velocity of the head of the lens wearer and/or a velocity of a fixation position of the gaze of the lens wearer;
- mapping the obtained gaze motion data to a specific lens design for the lens wearer by means of a mapping function; and
- providing lens design information for producing a spectacle lens for the lens wearer according to the specific lens design.

The method enables the production of individual spectacle lenses for the lens wearer and eliminates at least one of the drawbacks described above by detecting and/or recording the viewing behaviour of the lens wearer. The detected gaze motion data may be used to model the motion-related gaze for

- quantifying and/or classifying motion-related properties of gaze behaviour; and/or
- quantifying and/or classifying variations of properties of gaze behaviour as a function of gaze direction and/or the change of gaze direction; and/or
- generalising from a measurement viewing task to other viewing tasks, particularly to viewing tasks the lens wearer will preferably use the lenses in.

The individual spectacle lenses may be ophthalmic lenses adapted to the lens wearer, in particular a multifocal lens like a bifocal lens or a progressive addition lens. The lens design of progressive addition lenses is often characterized by lens design parameters like a progression length and/or a width of the progression channel of the lens.

The visual scene may be shown to the lens wearer on a display device. The visual scene may contain a moving stimulus. The moving stimulus may be a simulated stimulus shown to the lens wearer on a display device. The display device showing the visual scene may, e.g., be a display and/or a virtual reality headset and/or a light field display.

The stimulus may be implemented as a target moving along a path for the lens wearer to follow with his gaze. The lens wearer can be invited to fixate the stimulus while it is moving.

For the method, the lens wearer is not required to actually wear spectacle lenses. Instead, the lens wearer can fixate the stimulus with the naked eye(s). The measurement be more accurate when the vision of the lens wearer is corrected, e.g., by spectacle lenses, contact lenses, a phoropter, and/or a light field display.

While the lens wearer is viewing the visual scene, for example while the wearer fixates the moving stimulus, the gaze motion data may be detected and/or received and, thus, obtained. A detection of the gaze motion data can be done by at least one eye tracker, by at least one camera, and/or by means of a virtual reality headset comprising at least one eye tracker and/or orientation sensors.

The virtual reality headset may even include adjustable or exchangeable lenses to at least partly correct an ametropia of the lens wearer. An advantage of a virtual reality headset is its commercial availability, its relatively small size and at the same time the ability to create fully controlled virtual environments in which almost arbitrary visual tasks can be presented to the wearer, in particular the moving stimulus moving in a 2D and/or 3D space.

The gaze motion data may be obtained in dependency of the velocity of the fixation position of the wearer's gaze, in particular the velocity of the moving stimulus. The velocity of the fixation position may be measured as the velocity of the gaze of the wearer, i.e. the velocity of the combined velocity contributions of the eye and the head in a coordinate system external to both, the head and the eyes. This may, e.g., be measured by a virtual reality headset. Alternatively, the velocity of the fixation position may be obtained as the velocity of the moving stimulus, e.g., as motion data of the moving stimulus.

The velocity of the fixation position and/or of the gaze of the wearer may be related to the velocity of the eye direction and/or to the velocity of the head of the wearer. Similarly, also the velocity of the eye direction may be related to the velocity of the head.

The velocity of the eye direction may refer to a monocular and/or a binocular eye velocity.

The gaze motion data comprises at least information about one of the three velocities, but it may also contain information about two or all three of the velocities and/or relations between at least two of the three velocities. Preferably, the gaze motion data includes information about a velocity of the eye direction and/or the velocity of the head of the lens wearer as a function of the velocity of the fixation position. Thus, for the gaze motion data, the velocity of the eye direction and/or the velocity of the head of the lens wearer may be obtained, and, e.g., stored on a medium, preferably, together with at least the velocity of the fixation position. The gaze motion data may be detected over a time period. Additionally, the gaze motion data may also comprise information about the direction the fixation position is moving.

The gaze motion data may comprise implicit information about velocities of at least the eye direction and/or the head direction and/or head orientation, and/or the direction of gaze by being a time series of these values. In this case, the velocities can be calculated by differentiating the values in respect to time.

Therein, each velocity may also refer to or be an angular velocity. Thus, also the gaze motion data may contain information about the angular velocities of the eye direction, the head, the direction of the fixation position, and/or gaze.

The gaze motion data comprises at least information of a motion-related gaze property, e.g., the velocity of the eye direction and/or of the head and/or the velocity of the fixation position, in particular how they depend on each other and/or on the velocity of a moving stimulus. The gaze motion data may explicitly contain one, two, or all of these velocities. The gaze motion data may comprise additional information discussed in more detail below, for example further properties of the fixated stimulus may, e.g., its position, and/or direction, and/or its proximity (i.e. 1/distance to the observer).

The gaze motion data may contain the eye direction, the gaze direction, and/or the head direction as a time series. The according velocities may be determined out of this/these time series of the eye, gaze, and/or head direction and/or head orientation.

The gaze motion data may be used to understand and/or model and/or predict the individual motion-related gaze behaviour of the lens wearer. For example, they may be used to model a stimulated motion-related gaze behaviour of the lens wearer for a specific movement of the stimulus. In other words, the gaze motion data may be used to predict how the lens wearer will react, in particular how his motion-related gaze behaviour will react, in response to a specific movement of the stimulus. This enables a description of the motion-related gaze behaviour of the lens wearer for choosing an individual specific lens design.

When detecting the gaze motion data, high ocular velocities during fixation saccades may be omitted since neither the stimulus fixated before the fixation saccade, nor the stimulus fixated after the fixation saccade can be fixated during the saccade. Omitting these high ocular velocities may thus improve the quality of the gaze motion data.

The detected gaze motion data is mapped to the specific lens design for the lens wearer by means of the mapping function. This mapping may be applied in steps. For example, the gaze motion data may first be processed into predetermined parameters, and these may then be mapped to the specific lens design. The mapping function may be applied to either the detected gaze motion data or to parameters derived from the detected gaze motion data. For example, the mapping function may be applied to velocities determined and/or derived from the gaze motion data. The mapping function may be based on specific rules and/or empirical data discussed further below. The mapping function assigns the specific lens design to the detected gaze motion data and, thus, individually to the motion-related gaze behaviour of the lens wearer.

The method overcomes the mere consideration of static properties of the gaze of the lens wearer by considering the motion-related gaze behaviour which overcomes the drawbacks of the prior art identified above.

The specific lens design may then be used to produce the individual spectacle lens for the lens wearer. For example, the specific lens design may then be converted into lens ordering data which may then be used, e.g., sent, to a lens manufacturer. For example, the lens design information provided by the method may be provided as lens ordering data. Once the specific design of the lens or lenses is established by the method, it can be optimised and produced with state-of-the-art methods to account for spectacle frame and/or wearer parameters not related to gaze behaviour, like, for example, the position of wear of the lenses, the biometry of the eyes, as well as physiological or morphological parameters like the perception of optical blur, age of the observer, the typical reading distance, the side of the dominant eye, the body height, etc.

The lens design information is configured and provided for the production of at least one individual spectacle lens for the lens wearer. The lens design information may be used for the production of the individual spectacle lens. The lens design information may comprise coordinates of one or more lens surfaces in any suitable coordinate system to characterize the shape(s) of one or more lens surfaces and optionally the (relative) positions thereof. The lens design information may comprise a map with sag heights (sagitta) for a lens surface and or control data for devices used to produce lenses, e.g., for a milling machine. The method may, optionally, further include the step of producing the spectacle lens according to the lens design information. However, already with the provision of the lens design information, the method at least enables the production of individual spectacle lenses based on the obtained gaze motion data.

So, while the motion-related gaze behaviour is used to choose the specific lens design, e.g., a 'soft' or a 'hard' lens design, this lens design may still be adapted to the usual centring parameters used for spectacle lenses.

The method enables providing individual spectacle lenses for the lens wearer that are adapted to its motion-related gaze behaviour and, thus, enable an improved viewing quality in nearly any motion-related gaze situation.

According to embodiments, the gaze motion data comprises information about at least two of the velocities, namely about two velocities of the three velocities of the eye direction, the head direction, and the fixation position. The gaze motion data comprises information about a relation between these two velocities, and the mapping of the obtained gaze motion data to the specific lens design depends on the information about the relation of these two velocities. For example, the gaze motion data may comprise one of the velocities as a function of another one of the three velocities: the velocity of an eye direction, the velocity of the head, the velocity of fixation positions fixated in the visual scene. The relation between the at least two velocities may be determined in a separate method step, in particular based on a time dependency of two or three of the velocities. The time dependency may be used to compare the velocities to each other at concurrent and/or delayed points in time and to establish the relation between the velocities. Considering the relationship between two velocities enables information about use habits of the wearer, in particular whether the wearer prefers moving the eyes or the head faster in a motion-related situation. The relation enables information about a motion-related eye response and/or head response. This information is considered when selecting the lens design, which may improve the quality of the individual spectacle lenses for the wearer.

According to one embodiment, the method may comprise extracting an (approximate) functional relation between at least one of the two velocities, including the velocity of an eye direction and the velocity of the head of the lens wearer, and the velocity of a fixation position of the gaze of the lens wearer. In other words, in one example, an (approximate) functional relation may be extracted for the velocity of the eye direction as a function of the velocity of a fixation position of the gaze of the lens wearer, or vice versa. In another example, an (approximate) functional relation may be extracted for the velocity of the head of lens wearer as a function of the velocity of a fixation position of the gaze of the lens wearer, or vice versa. In yet another example, an (approximate) functional relation may be extracted for the velocity of the eye direction and the velocity of the head of lens wearer as a function of the velocity of a fixation position of the gaze of the lens wearer, or vice versa.

Extracting an (approximate) functional relation may include retrieving the functional relation from the gaze motion data, provided that such functional relation is already included in the gaze motion data (e.g. either from the beginning or due to some intermediate enrichment process for that data. Alternatively or additionally, extracting may include analysing the gaze motion data and determining a functional approximation of said relation by fitting an appropriate model to the data (including fitting an analytical model and/or a statistical model, for example).

Based on that (approximate) functional relation, the mapping of the obtained gaze motion data to the specific lens design may depend on the extracted (approximate) functional relation of these (at least) two velocities.

In an optional implementation, a velocity of a moving stimulus may be used as the velocity of the fixation position of the gaze of the lens wearer for the purpose of extracting the (approximate) functional relation. In other words, in embodiments where the velocity of the fixation position of the gaze of the lens wearer is not available or not reliable, the velocity of the fixation position of the gaze of the lens wearer can be replaced with the velocity of a moving stimulus for the purpose of extracting the (approximate) functional relation.

According to embodiments, the visual scene shown to the lens wearer comprises at least one moving stimulus. The velocity of the moving stimulus is used as the velocity of the fixation position of the gaze of the lens wearer. The gaze motion data comprises information about the velocity of an eye direction and/or the velocity of the head of the lens wearer as a function of the velocity the moving stimulus. Information about the velocity of the moving stimulus is easily obtainable, if the moving stimulus is controlled by a simulation device and its position or velocity is provided as part of the gaze motion data. Thus, if there is only a single moving stimulus that can be looked at by the lens wearer the velocity of the fixation position does not need to be measured but can be provided as exact data instead. Depending on the setup, this may be easier and/or more reliable than measuring the velocity of the gaze as velocity of the fixation position.

For stimulating the wearer, more than one moving stimulus may be used. Then, the velocity of the fixation position may be considered to be the velocity of the currently fixated moving stimulus.

In a development, the gaze motion data further comprises information about at least one of a position of the stimulus and/or a direction of the stimulus and/or a proximity of the stimulus to the lens wearer, e.g. measured in 1/distance. This data may further improve a recognition and/or a description and/or a modelling of the motion-related gaze behaviour of the lens wearer. The data may be additionally considered when predicting and/or understanding the motion-related gaze behaviour. Consequently, the detection of these additional information for the motion-related gaze enables further improving the mapping to the specific lens design suited for the lens wearer.

According to embodiments, the gaze motion data is at least partially detected by an eye tracker. Eye trackers greatly improved over the last years and enable the time-dependent detection of the gaze direction and can thus gather information on the directions and positions of the objects fixated, e.g., the fixation position. Additionally, separate head trackers that are oftentimes integrated in mobile eye trackers can measure the head direction or orientation. This eye and/or gaze and/or head direction data may be detected as a time series which enables calculating the gaze velocity and/or head velocity of the lens wearer from it. The eye tracker may be installed fixed to a room and/or it may be integrated in a headset like a virtual reality headset. The eye tracker is configured and arranged to track at least one or both eye(s) of the lens wearer. For tracking the monocular eye directions of each eye of the lens wearer, at least two eye trackers may be used, wherein each is configured and arranged to track one eye of the lens wearer, respectively. A measurement system equipped with a head tracker and an eye tracker may enable measuring both the time-dependent head and eye directions, and therefore may enable a reliable detection of the gaze motion data.

**Viewing Task**

According to embodiments, the gaze motion data is obtained for at least one viewing task during which the fixation position of the lens wearer is tracked and/or during which the position of the moving stimulus is known or is recorded, while the stimulus moves along a testing path. A viewing task relates to a specific movement of the fixation position and/or the stimulus during which the lens wearer is, e.g., invited to fixate the stimulus on its movement path. The viewing task may be characterized by the path along which the fixation position and/or the stimulus is moving, by its movement speed, by the size of the stimulus, by the brightness/contrast of the stimulus, and/or by the number of moving stimuli. At least during the viewing task, the gaze motion data of the wearer is detected. For detecting the gaze motion data, a single-stimulus viewing task and/or a multi-stimulus viewing may be used.

In embodiments of the invention, a viewing task or a plurality of viewing tasks performed during the detection of the gaze behaviour data may comprise any of the following:

- following the moving stimulus with the gaze while it moves along a trajectory, particularly along a trajectory resembling a random walk;
- looking at several predetermined stimuli, particularly while at least one of the stimuli is moving;
- searching an object in a scene; and/or
- free viewing of a scene without special instructions.

To elicit different types of anisotropic head motion, the viewing task used during measurement of gaze behaviour data may be configured to enable evoking gaze behaviour into at least two different directions, particularly into two directions that are neither parallel nor anti-parallel. Measured properties of gaze behaviour can be for example static and/or motion-related properties of the coordination of the head and eyes, like the eye direction and/or head direction, and/or the eye direction velocity and/or the head direction velocity.

Accordingly, in embodiments, the viewing task(s) comprise(s) the at least one stimulus moving in at least two different directions that are neither parallel nor anti-parallel. This may enable sufficient variety of the measured gaze behaviour to encompass a meaningful variety of gaze behaviour data.

A well-suited viewing task may be one or more stimuli located or appearing at these skew directions (as seen from a neutral direction straight ahead of the wearer), and/or of one or more stimuli moving into the desired directions. Both static and motion-related gaze behaviour can be evoked in this way, depending on the velocity of the stimuli, with motion-related gaze behaviour being evoked by non-zero stimulus velocities, and static gaze behaviour being evoked by fixated stimuli with velocities zero after the head and eye motion stops.

Instead of using viewing tasks in which one or more stimuli need to be followed, free viewing tasks can be used alternatively or in addition to evoke static and/or motion-related gaze behaviour by presenting at least several interesting and possibly moving stimuli to the observer without any other instruction besides that the observer can look at the scene. In these cases, the use of an eye tracker may be advantageous to measure both the head and eye directions.

In embodiments, the viewing task may be configured to evoke static and/or motion-related gaze behaviour that includes at least two neither parallel nor antiparallel directions from the following list: horizontal and/or vertical and/or oblique eye direction, horizontal and/or vertical and/or oblique head direction, horizontal and/or vertical and/or oblique eye velocity, horizontal and/or vertical and/or oblique head velocity.

Alternatively or additionally, a viewing task may be configured to evoke gaze behaviour in at least two neither parallel nor antiparallel directions by showing at least one randomly moving stimulus to the observer in which at least one of the shown stimuli visits at least two directions and/or possesses at least two different velocities during the detection measurement that different eye directions and/or head directions and/or eye velocities and/or head velocities are being evoked, of which at least two are neither parallel nor antiparallel.

Since anisotropic gaze behaviour distinguish the direction-dependency of gaze behaviour, gaze motion parameters obtained during a fit of motion-related gaze behaviour models to the gaze motion data of the wearer can be used to choose or calculate both vertical and horizontal sizes of the zones of good vision in progressive addition lenses. This may be done by using a mapping function that receives the gaze motion parameters that describe the anisotropy of gaze behaviour as inputs, and have as output the specific lens design parameters needed to calculate or choose the spectacle lenses best suited to the measured gaze behaviour.

**Motion-Related Gaze Behaviour Model**

According to embodiments, a motion-related gaze behaviour model is established based on the obtained gaze motion data. The motion-related gaze behaviour model is used to determine at least one gaze motion parameter describing the motion-related gaze behaviour of the lens wearer. At least one of the determined gaze motion parameters of the motion-related gaze behaviour model is used to map the at least one gaze motion parameter to the specific lens design.

The motion-related gaze behaviour model is configured and used to quantify the motion-related properties of gaze behaviour of the lens wearer. It may be a model of the velocity of the eye direction and/or the velocity of the head. Both the ocular velocity and the head velocity can be modelled at least as a function of the velocity of the fixated stimulus and/or object. In cases in which it is not defined beforehand which object is fixated, the eye and head velocities can be also modelled dependent on the direction of gaze, which is the velocity of the combined directions of the head and the eyes. Other properties of the fixated stimulus may be used in addition, for example the position, and/or direction, and/or the proximity (i.e. 1/distance to the observer). Also measured properties of the head and/or the eye may be used in addition to the properties above, for example the gaze direction may be used to model the head velocity. It might be advantageous to use nonlinear functions of one or more of the properties above (for example monomials or the products of one or more properties) to model the velocity of the gaze direction and/or the velocity of the head.

The motion-related gaze behaviour model can be used in a single-stimulus viewing task as well as in a multi-stimulus viewing task when the ocular and/or head velocities are modelled as functions of the properties of the currently fixated stimulus (e.g. its velocity and/or position and/or direction and/or proximity). In that case, the high ocular velocities during fixation saccades may be omitted since neither the stimulus fixated before the fixation saccade, nor the stimulus fixated after the fixation saccade can be fixated during the saccade.

Whether the only stimulus (in a single-stimulus viewing task) is fixated, or which stimulus (in a multi-stimulus viewing task) is fixated, can, e.g., be measured with eye trackers. In this way, the eye tracker is hence used to select data samples in which the stimulus or one of several stimuli was fixated based on a suitable threshold.

In embodiments, the motion-related gaze behaviour model is configured to further calculate lens wearer parameters of the gaze of the lens wearer, in particular the pupil size of the lens wearer. The motion-related gaze behaviour model may additionally describe other properties of the eyes like the pupil sizes. Preferably, the pupil size is modelled dependent on the stimulus proximity or convergence. It may be measured by a binocular eye tracker. Alternatively, or in addition, the pupil size may be modelled by a pupil model depending on the overall brightness of the scene looked at, and/or on the local brightness of the scene and/or the stimulus currently fixated. The models of the other properties of the eye may be used during the calculation of the lens after the calculation or selection of the specific lens design. For example, the pupil model may be used to compute the pupil size. Alternatively, or additionally, the models of the other properties of the eyes may be used as well during calculation or selection of the lens design. The additional data may increase the preciseness of the motion-related gaze behaviour model and/or broaden its intended use, e.g., by being applicable to calculate the actual lens.

Generally, the measured properties of the eyes, the head and the fixated stimulus may be expressed in various coordinate systems. For example, the velocity of the eye may be expressed in the coordinate system of the head, and the orientation of the head may be expressed in the coordinate system of the world or the torso of the observer.

The motion-related gaze behaviour model may be parameterised by model parameters including, e.g., the gaze motion parameters, which in turn may be used to calculate or select the suitable personalised specific lens design, possibly characterised by lens design parameters.

The motion-related gaze behaviour model may contain more parameters than are needed to select and/or define the specific lens design. In these cases, a subset of model parameters is mapped to the possible designs of the lenses.

In a development, the motion-related gaze behaviour model is used to validate the predicted motion-related gaze behaviour of the lens wearer for a specific viewing task and to determine a predicted motion-related gaze behaviour for the specific viewing task. Said specific viewing task is then shown to the lens wearer by means of the moving stimulus as fixation position while obtaining the actual gaze motion data of the lens wearer while fixating the stimulus. In case the actual gaze motion data are closer to the predicted motion-related gaze behaviour than a predetermined threshold, the predicted motion-related gaze behaviour model can be considered to describe the measured data well enough and the specific lens design is chosen based on the current motion-related gaze behaviour model, otherwise, the motion-related gaze behaviour model is amended based on further obtained gaze motion data. This method can be used to evaluate the motion-related gaze behaviour model. In case the motion-related gaze behaviour model is not sufficiently precise yet, it may be improved by measuring further gaze motion data that can be used in addition to or in place of the data already measured. Thereby, the reliability of the motion-related gaze behaviour model may be checked and the detection of the gaze motion data may be stopped within a reasonable but sufficient time frame.

In a further development, the motion-related gaze behaviour model is a trainable model that is trained with the gaze motion data obtained. Therein, the gaze motion data may be obtained during a plurality of viewing tasks during which a moving stimulus is moving while the lens wearer fixates the stimulus. Therein, the position of the moving stimulus may be considered as fixation position of the gaze of the lens wearer. Alternatively, the position of the moving stimulus may be used additionally to the fixation position of the lens wearer to train the motion-related gaze behaviour model. For example, the motion-related gaze behaviour model may be implemented as a neural network which may be trainable with the detected gaze motion data. The trainability enables improvement of the motion-related gaze behaviour model until its precision is sufficient to reliably predict and/or model the lens wearers motion-related gaze behaviour.

The selection or calculation of the specific lens design may be accomplished by a mapping function that maps gaze behaviour models and/or viewing tasks to lens designs that are suited well for performing the viewing behaviour exhibited by the future wearer in the viewing tasks the lens is personalised to. The mapping function may be thus mapping viewing behaviour model parameters (for example the preference of moving the eyes over moving the head in the vertical direction) to design parameters of the lenses (for example the progression length). The mapping function thus transforms the information on the gaze behaviour contained in or extracted from the measured gaze behaviour data, for example in the form of gaze behaviour parameters, into lens design parameters. In the simplest case the mapping function is a linear or affine function. In more elaborate cases the mapping function can also be a nonlinear function. As such, the mapping function may be represented by a matrix or by more expressive means like polynomials, rational functions, splines, support vector machines, artificial neural networks, or other means used routinely in machine learning, as well as combinations thereof.

## Anisotropic Motion-Related Gaze Behaviour Model

According to embodiments, the gaze motion data, in particular the gaze motion parameters, are determined in both at least one horizontal direction and at least one vertical direction.

Both static and motion-related gaze behaviour of the same lens wearer can differ in the horizontal and vertical directions, and that gaze behaviour in the horizontal and vertical directions can differ between observers as well. For example, two different wearers can have the same relative deflection of the eyes and the head while fixating a horizontally displaced stimulus located at a given horizontal gaze direction, but they can have different relative deflections of the eyes and the head while fixating a vertically displaced stimulus located at a given vertical gaze direction. In many cases, it is thus not sufficient to measure gaze behaviour just along a single direction (e.g. in the horizontal direction only, or alternatively, in the vertical direction only).

Therefore, the gaze motion data may be detected in different directions, and an anisotropic motion-related gaze behaviour model may be used to calculate anisotropic gaze behaviour parameter(s) from the detected gaze motion data. This anisotropic motion-related gaze behaviour model may be configured to predict different gaze behaviour dependent on the direction, in particular as a function of gaze direction, and/or eye direction and/or head direction.

The anisotropic motion-related gaze behaviour model may be created

- based on measurements of the gaze behaviour in different directions;
- by using models configured and/or able to predict different gaze behaviour dependent on the direction, in particular as a function of gaze direction, and/or eye direction and/or head direction.

A motion-related gaze behaviour models that satisfies the second condition above is referred to as anisotropic motion-related gaze behaviour models herein.

The inventor found out that horizontal and vertical types of head motions can elicit completely different visual impressions for a progressive spectacle wearer who is fixating a stimulus while moving the head. These differences can be attributed to differences of horizontal and vertical astigmatism gradients of the progressive lenses. An astigmatism gradient quantifies the slope change of the absolute value of the unwanted astigmatism (i.e. the astigmatism that remains after the object wavefront has been traced through the lens and either traced into the eye or combined otherwise with the ametropia of the eye) subject to a changing intersection point of the line of sight with the lens or to a changing viewing direction. The unwanted astigmatism is oftentimes also referred to as the residual astigmatism. For example, some progressive lens designs may have strong horizontal astigmatism gradients when compared to vertical astigmatism gradients, while in other progressive lens designs the differences of astigmatism gradients in the vertical and horizontal directions is less pronounced (see for example the designs 'N' and 'I' in Figure 5 of this document, or Figure 1 and Table 2 found in Forkel & Reiniger, et al., Optom Vis Sci. 2017 Feb;94(2):208-218. doi: 10.1097/OPX.0000000000001016). While horizontal astigmatism gradients are perceived stronger when the head is moving in a horizontal gaze direction, vertical astigmatism gradients are perceived stronger when the head is moving in a vertical direction.

It is hence possible to improve the personalisation of progressive lenses by adapting the vertical and horizontal astigmatism gradients separately, based on the anisotropic gaze behaviour parameter(s) of the viewing behaviour that are horizontally and vertically possibly different for the same wearer, and that have a broader distribution for a population of different wearers.

Thus, in embodiments, a progressive lens design with less pronounced horizontal astigmatism gradients is be assigned to the wearer having a stronger than average head motion response to horizontal stimulus motion or vice versa.

Alternatively, or additionally, in embodiments, the specific lens design is selected to have softer vertical astigmatism gradients if the wearer exhibits stronger than average head motion response to vertical stimulus motion or vice versa.

In embodiments, the determined anisotropic gaze motion parameters additionally depend on the eye direction, which may be used to personalize progressive lens designs even further. The latter can have different astigmatism gradients at the periphery of the near and far zones of clear vision, cf. for example the horizontal as well as vertical astigmatism gradients in the far and near zone of the designs 'N' and 'D' in Figure 5 of this document, or Figure 1 and Table 2 found in Forkel & Reiniger, et al., Optom Vis Sci. 2017 Feb;94(2):208-218. doi: 10.1097/OPX.0000000000001016.

To characterise anisotropic static gaze behaviour that can be used to improve lens designs, it is reasonable to model the gaze behaviour as a function of the binocular gaze direction, for example relative to the direction straight ahead of the observer, because the monocular lines of sight can be derived from the binocular line of sight and the stimulus distance.

In embodiments, the motion-related gaze behaviour is characterised by expressing the angular velocities of the eyes and the head as functions of the gaze velocity and may additionally depend on at least one other variable that refers to a position or direction and which is not a velocity, in particular, the modelled angular velocities are additionally dependent on one of:

- a gaze direction,
- an eye direction,
- a head direction,
- or the direction or distance of a fixated object.

This further improves the prediction quality of the (possible anisotropic) motion-related gaze behaviour model and, consequently, enables the selection of a better suited specific lens design.


**Mapping Function**

In embodiments, the detected gaze motion data is mapped to a specific lens design comprising specific lens design parameters, including in particular a specific progression length. Therein, the mapping function may at least map at least one of the the gaze motion parameter(s) to the lens design parameters.

In embodiments wherein the lens is a progressive lens, the lens design parameter may be at least one, any subset, or all of the following parameters:

- the progression length,
- the positions of the zones of good vision,
- the slope of the power addition in the intermediate vision zone,
- a design characteristic,
- a lens hardness parameter,
- a maximal astigmatism gradient, and/or
- any other parameter commonly used to control the design of ophthalmic lenses used during lens calculation.

The gaze motion data and/or the gaze motion parameter(s) mapped by the mapping function may be parameters that can be measured reproducibly for the same person over several measurements and several different viewing tasks. Preferably, there is substantial individual variation of these parameters in different persons such that the different viewing behaviours can be discriminated based on different parameter values. More preferably, persons whose gaze behaviour is described by different parameter values report different suitability levels of a particular lens design taken from the possible lens designs the mapping function is mapping to. Preferably, the suitability of the lens design can be predicted from the gaze behaviour parameters. Preferably, the mapping function maps the viewing behaviour model (e.g. a vector of model parameter values) of the lens wearer to the most suitable lens design (e.g. a vector of lens design parameter values), e.g., for performing one or more specified viewing tasks.

The mapping function may be constructed based upon expert knowledge. For example, a lens design expert may pick the best suitable lens designs for performing given viewing tasks by persons characterised by different gaze behaviour parameters, and the mapping function is constructed to map the gaze motion parameters to the most suitable lens design parameters. An example of expert knowledge is the preference of softer progressive lens designs by persons whose head motion responds stronger to excentric stimulus positions, and vice versa. The mapping to the specific lens design may at least in parts be similar to the mapping described in EP 1959294 A2.

In embodiments, the mapping function may be configured to map the gaze motion data of a person whose head motion responds stronger to excentric stimulus positions to a softer progressive lens design.

Similarly, in embodiments, the mapping function may be configured to map the gaze motion data of a person whose head motion responds less to excentric stimulus positions to a harder progressive lens design.

Herein, the terms 'soft' and 'hard' are typically used to refer to progressive lens designs with low and high maximum values of unwanted astigmatism in relation to the power addition of the lens, respectively. While the assignation of progressive lens designs above may also be done based on static gaze behaviour measurements, it is important to realise that gaze motion data and/or parameters are far better suited to assign a progressive lens design than are static gaze measurements. This has become evident to the inventor an easy and/or better way to assess the design of a progressive lens is to move the head while an object is fixated. This may be used as a visual task to compare the different progressive lens designs in wearer trials, in which participants are asked to fixate a high-contrast visual target like a computer keyboard or a grating projected onto a wall or onto the floor, and then to turn the head repeatedly in a horizontal and/or vertical direction. Such a task may be similar to the visual task as described in Forkel & Reiniger, et al., Optom Vis Sci. 2017 Feb;94(2):208-218. doi: 10.1097/OPX.0000000000001016.

The inventor found out that the assignment of lens designs based on the motion-related gaze behaviour, in particular based on the gaze motion parameter(s) of the motion-related gaze behaviour model, leads to better personalisation than a personalisation based on static gaze behaviour measurements alone. This is because the perception of 'softness' of a lens design happens in practice mainly in motion-related viewing conditions in which the head has a non-zero velocity.

The motion-related gaze behaviour can be quantified by describing the angular velocities of the eyes and the head as functions of the gaze velocity, i.e. of the angular velocity of the currently fixated object. To quantify the gaze behaviour gaze motion parameter(s) may be used.

## Advanced Mapping Function

In embodiments, the mapping function can be the weighted interpolation of two separate lens design parameter vectors, obtained by a first and a second mapping function, respectively. Therein, the first mapping function may map the gaze behaviour parameters of the lens wearer to a first lens design parameter vector, whereas the second mapping function may map a viewing task or a (possibly weighted) collection of viewing tasks to a second lens design parameter vector. In this way, the lens can be personalised to both the individual gaze behaviour as well as to the individual visual tasks.

Thus, the mapping function may comprise several mapping functions that map different information of the gaze motion data to (possibly different) lends designs.

The mapping function may be also constructed based on data collected in wearer trials, in which the gaze behaviour is measured and modelled, and in which the suitability of different lens designs for various viewing tasks is determined by subjective assessment and/or by measurement of the performance of wearers equipped with lenses with different lens designs.

Different mapping functions may be used and/or applied depending on the measurement devices used. For example, different mapping functions may be used depending on a virtual reality headset used to record the gaze behaviour, i.e. used to detect the gaze motion data. The different mapping functions used to perform the mapping may differ only in their parameters but have the same mathematical form.

In embodiments, the gaze motion data is mapped to a weighted interpolation of at least two separate lens designs. It may also be mapped to three, four or even more separate lens design. The separate lens designs may be provided as reliable and know lens designs with different properties. For examples, one of the separate lens designs may be a known 'soft' progressive lens design, and another of the separate lens designs may be a known 'hard' progressive lens design. The separate lens designs may also differ in progression length. The separate lens designs may define a calibration space and/or design space into which the gaze motion data is mapped. For example, it is known to use three or four known separate lens designs arranged in a triangle as design space. The gaze motion data is mapped, in particular by the mapping function, to a specific position in the design space. The specific lens design is then chosen as the weighted interpolation of the separate lens designs defining the design space. Thereby, a reliable method is provided to find and select in individual lens design for the lens wearer that is based on his individual motion-related gaze behaviour and derived from known and well-established lens designs.

An aspect relates to a (computer-)system for calculating and/or optimizing and/or producing individual spectacle lenses, comprising:

- a display device configured to show a visual scene to a lens wearer;
- an obtaining device configured to obtain gaze motion data comprising a velocity of an eye direction and/or a velocity of the head of the lens wearer and/or a velocity of a fixation position of the gaze of the lens wearer;

- a mapping device configured to map the obtained gaze motion data to a specific lens design for the lens wearer; and
- a providing device for providing lens design information for producing spectacle lenses for the lens wearer according to the specific lens design.

The system may be used to execute the method according to the previous aspect. Therefore, the description of the method also applies to the system and vice versa. For example, the simulation device may comprise a display device controlled by a computer program product simulating the moving stimulus, e.g. the display device of a virtual reality headset or a classic monitor.

The display device may include a simulation device simulating a moving stimulus on its display.

The obtaining device may comprise a detecting device for measuring at least parts of the gaze motion data, e.g., at least one eye tracker and/or at least one head tracker, e.g., the eye tracker of a virtual reality headset.

The mapping device may comprise a computer program product processing the detected gaze motion data and mapping it to the specific lens design.

The providing device may, e.g., be a computer module providing the providing lens design information. The lens design information may be provided in digital form, so that it can be sent to a production facility.

The system may further comprise a producing device for producing the spectacle lens according to the lens design information. It may, e.g., be a whole production facility arranged at a different location as the location at which the lens wearer is fixating the stimulus. For example, the selected specific lens design may be sent to a manufacturer for manufacturing the spectacle lens according to the selected lens design.

An aspect relates to a computer program product for providing individual lens design data comprising a computer-readable storage medium storing one or more programs, the one or more programs comprising instructions that, when executed by at least one programmable processor, cause the at least one programmable processor to perform operations comprising:

- showing, e.g. simulating, a visual scene, in particular a moving stimulus, to a lens wearer;
- obtaining gaze motion data comprising a velocity of an eye direction and/or a velocity of the head of the lens wearer and/or a velocity of a fixation position of the gaze of the lens wearer;
- mapping the obtained gaze motion data to a specific lens design for the lens wearer; and
- providing individual lens design data for producing spectacle lenses for the lens wearer according to the specific lens design.

The computer program product may be used to control the devices of the system according to the previous aspect and/or to execute and/or control the method described above. Therefore, the description of the method and/or the system also applies to the computer program product and vice versa.

The invention is further illustrated in reference to examples and embodiments, some of which refer to figures. Embodiments of the invention are described with reference to the figures. Features of the embodiments shown in the figures may be combined with alternative embodiments. The embodiments as shown by:

Fig. 1A      shows plots of measured and predicted components of the angular velocity of the head and the eyes of a first observer A with a strong head motion response and a weak eye motion response;

Fig. 1B      shows plots of measured and predicted components of the angular velocity of the head and the eyes of a second observer B with intermediate head motion and eye motion responses;

Fig. 1C      shows plots of measured and predicted components of the angular velocity of the head and the eyes of a third observer C with a weak head motion response and strong eye motion response;

Fig. 2A      shows in a plot the nonlinear transformation of anisotropic gaze motion behaviour model parameters for five different observers;

Fig. 2B      shows in a plot values of time-delayed eye motion and head motion responses in horizontal and vertical directions from example model 2 for the same five observers;

Fig. 2C-2E      show, respectively in a plot values of response parameters of combined eye motion and head motion response, and parameters of time-delayed eye and head motion response in horizontal and vertical directions for the same five observers;

Fig. 3      shows in a plot a nonlinear transformation of anisotropic gaze motion behaviour model parameters for 19 observers;

Fig. 4      shows the gaze motion behaviour model parameter shown in Fig. 3 mapped to alternative design parameters of progressive spectacle lenses, which form a barycentric coordinate system as a lens design space, a so-called design characteristic; and

Fig. 5      shows a continuum of progressive lens designs available by varying the design characteristics parameters, which are essentially barycentric coordinates.

**Examples**

In the following, examples of anisotropic gaze motion behaviour models according to the invention are shown.

Here, a world coordinate system is used that is approximately centred on the head when the observer is looking straight ahead and is holding the head in a comfortable position (comfortable observer posture). The z-axis of the world coordinate system is aligned horizontally and is pointing away from the observer approximately into the direction 'straight ahead'. The x-axis of the world coordinate system is pointing to the left of the observer, and the y-axis is pointing up. The head coordinate system aligns essentially with the world coordinate system when the observer takes the comfortable posture described above.

In the formulas below, the following conventions are used:

- Directions (as unit vectors) are denoted by r, angular velocities are denoted by $\omega$, and distances to the origin are denoted by *d*.
- Variables predicted by the model are labelled with a 'hat' (^), while measured variables do not have any additional accent.
- Deviations of measured variables from the value predicted by the model are denoted by $\delta$ preceding the variables (e.g. $\delta r$ is the deviation of the measured direction from the modelled direction).
- Standard deviations of a particular variable calculated from data of all measurement times are denoted by $\sigma$ preceding the variables (e.g. $\sigma r$ is the standard deviation of the measured direction).
- The superscript separated by a vertical bar specifies the object the variable is referring to (as a letter to the left of the bar) as well as the coordinate system the variable is expressed in (as a letter to the right of the bar). The letters *W, T, S, G, H* and *E* correspond to the world, the torso of the wearer, the stimulus, the gaze of the wearer, the head of the wearer and the eye(s) of the wearer as objects, respectively. For example, $\omega^{E|H}$ denotes the angular velocity of the eyes expressed in head-fixed coordinates (ocular velocity), while $r^{G|W}$ is the gaze direction unit vector in the world coordinates.
- The subscript *x,y* and z describes the x, y and z-coordinates in the coordinate system specified by the superscript with the letter right of the vertical bar. The dummy subscript *u* refers to one of *x, y* or *z*. For example, $\omega_y^{S|H}$ is the y-component of the angular velocity of the stimulus in the head-fixed coordinate system.
- Unless referred to explicitly, time-dependence is omitted to avoid unnecessary complexity of the notation. That means for example, that even though the y-component of the stimulus angular velocity in head-fixed coordinates depends on the time *t*, like $\omega_y^{S|H}(t)$, this variable will be written without the obvious time dependency: $\omega_y^{S|H}$.
- In the example, model parameters do not depend on time and are optimised to match the measured data. They are denoted by $\theta$, and as all the examples refer to linear regression, different notation variants are used to refer to the same parameters to simplify the notation:

    o In a first notation variant which is used to define mainly functions of model parameters, the model parameter of a given feature $f_i$ (i.e. the linear regression coefficient of the possibly non-linear function $f_i$ of measured variables) are denoted by $\theta[v{:}f_i]$, where *v* stands for the target variable to be fitted. For example, $\theta\left[\omega_y^{E|H}:\omega_x^{S|W}\right]$ refers to the model of the y-component of the ocular angular velocity in the head-fixed coordinate system, in which it is the linear coefficient to the term $\omega_x^{S|W}$, the x-component of the angular velocity of the stimulus in world coordinates.

    o In a second, abbreviated, notation variant which is used in model definitions, the argument in the brackets is dropped and replaced by a dot, while the model parameter still refers to the feature it is multiplied with. For example, the simplified notation of the term $\theta\left[\omega_y^{E|H}:\omega_x^{S|W}\right]\omega_x^{S|W}$ is $\theta[.]\omega_x^{S|W}$, which still reminds the reader that $\theta$ depends on something, but in which the fitted target variable $\omega_y^{E|H}$ and the feature $\omega_x^{S|W}$ are omitted to avoid lengthy equations.

- To refer to the vector containing all parameters of the model a notation with curly brackets is used, for example $\{\theta\} = (\theta[f_1], \theta[f_2], ..., \theta[f_N])$.
- The origin of the head coordinate system is equal to the position of the so-called cyclopean eye, to the position in between the approximate rotation centres of the left and right eyes.

**Model Example 1: Simple Anisotropic Motion-Related Gaze Behaviour Model**

The first model example relates to a simple anisotropic motion-related gaze behaviour model treating the motion-related gaze behaviour response of the eyes and the head in the different gaze directions separately. As in this example, the viewing task is limited to stimulus motion within a cone oriented along the z-axis of the world coordinate system with a full opening angle of approximately 50°, the z-components of the angular velocities of the eyes and the head in their respective coordinate systems are small compared to the x- and y-components, and the z-component can be typically neglected. In this case, the model predicts four target variables: the x- and y-components of the ocular angular velocity and the x- and y-components of the head angular velocities:

$$\widehat{\omega}_x^{E|H}\left(\omega_x^{G|W}\right) = \theta[.]\omega_x^{G|W}$$

$$\widehat{\omega}_y^{E|H}\left(\omega_y^{G|W}\right) = \theta[.]\omega_y^{G|W}$$

$$\widehat{\omega}_x^{H|W}\left(\omega_x^{G|W}\right) = \theta[.]\omega_x^{G|W}$$

$$\widehat{\omega}_y^{H|W}\left(\omega_y^{G|W}\right) = \theta[.]\omega_y^{G|W}$$

Therein, the model parameters $\{\theta\}$ = $\left(\theta\left[\omega_x^{E|H}:\omega_x^{G|W}\right], \theta\left[\omega_y^{E|H}:\omega_y^{G|W}\right], \theta\left[\omega_x^{H|W}:\omega_x^{G|W}\right], \theta\left[\omega_y^{H|W}:\omega_y^{G|W}\right]\right)$ describe the response of the x- and y-components of the eye angular velocity in the head-fixed coordinates and the head angular velocity in the world coordinates on the respective components of the angular velocity of the gaze in the world coordinates. To fit the model to the data of a particular observer, the least squares problem defined in the equations below is solved by using standard algorithms like for example calculating the pseudoinverse or using gradient descent:

$$\omega_x^{E|H} = \widehat{\omega}_x^{E|H}\left(\omega_x^{G|W}\right) + \delta\omega_x^{E|H}$$

$$\omega_y^{E|H} = \widehat{\omega}_y^{E|H}\left(\omega_y^{G|W}\right) + \delta\omega_y^{E|H}$$

$$\omega_x^{H|W} = \widehat{\omega}_x^{H|W}\left(\omega_x^{G|W}\right) + \delta\omega_x^{H|W}$$

$$\omega_y^{H|W} = \widehat{\omega}_y^{H|W}\left(\omega_y^{G|W}\right) + \delta\omega_y^{H|W}$$

That is, one minimizes the mean squared error, which is the squared deviations of the measured data from the values predicted by the model averaged over all measurement samples (i.e. over the time points t) and accumulated over all prediction targets:

$$MSE = \frac{1}{N}\sum_{t=1}^{N}\left[\left(\delta\omega_x^{E|H}(t)\right)^2 + \left(\delta\omega_y^{E|H}(t)\right)^2 + \left(\delta\omega_x^{H|W}(t)\right)^2 + \left(\delta\omega_y^{H|W}(t)\right)^2\right].$$

In the case above the equations are independent, and the least-squares problem can be treated as four separate problems with a single target variable.

If the currently fixated object (for example the fixated stimulus) is also moving with markedly non-zero z-components of the angular velocity, two more equations can be added analogously to account for two more targets: the z-components of the angular velocity of the eye in head-fixed coordinates, $\widehat{\omega}_z^{E|H}\left(\omega_z^{G|W}\right)$, and of the head,

$$\widehat{\omega}_z^{H|W}\left(\omega_z^{G|W}\right).$$

In both cases, the use of an anisotropic motion-related model, that is the separate modelling of velocity components and the use of separate coefficients to describe the motion response of the eye and head to the motion of the currently fixated object (for example the motion of the currently fixated stimulus) in different directions may have several advantages:

- the analysis may be simple and fast;
- there may be no need to refer to a specific gaze direction or stimulus position as the start of the measurement or as a reference point from which gaze amplitudes are measured;
- the model may describe markedly different motion responses of the eyes and head to stimulus motion in different directions.

From the model parameters $\{\theta\}$, the lens design parameters are derived by using a mapping function that transforms the model parameters $\{\theta\}$ to lens design parameters denoted by $\{\phi\}$ in the following, which control the design of the lenses perceived by the wearer.

For example, the design of progressive addition lenses can be controlled by lens design parameters related to the unwanted astigmatism to be realized in the lens. In the current example, the lens design parameters are used to modify the astigmatism gradients of the progressive lens by making the so-called objective functions used to calculate or optimize the lens dependent on these lens design parameters.

One possibility is to make the total astigmatism gradients of the lens depend on a combined lens design parameter, $\{\phi\} = (\phi_{cmb})$, which combines the anisotropic gaze behaviour parameters:

$$\phi_{cmb} = \frac{\theta\left[\omega_y^{E|H}:\omega_y^{G|W}\right] - \theta\left[\omega_y^{H|W}:\omega_y^{G|W}\right] + \theta\left[\omega_x^{E|H}:\omega_x^{G|W}\right] - \theta\left[\omega_x^{H|W}:\omega_x^{G|W}\right]}{\theta\left[\omega_y^{E|H}:\omega_y^{G|W}\right] + \theta\left[\omega_y^{H|W}:\omega_y^{G|W}\right] + \theta\left[\omega_x^{E|H}:\omega_x^{G|W}\right] + \theta\left[\omega_x^{H|W}:\omega_x^{G|W}\right]}$$

When one compares the assigned, calculated or optimised progressive lens designs for two future wearers with the same addition, the wearer with a stronger overall head motion response to motion of the fixated object that, in turn, leads to a lower value of $\phi_{cmb}$ will receive a lens with overall smaller astigmatism gradients than the wearer with a weaker overall head motion response.

If the z-components of the eye and head motion is accounted for, additional terms may be added to the numerator and denominator of the fraction used to calculate $\phi_{cmb}$ above: the difference (in the numerator) and the sum (in the denominator) of the z-components of the eye and head angular velocity,

$$\phi_{cmb}$$
$$= \frac{\theta\left[\omega_y^{E|H}:\omega_y^{G|W}\right] - \theta\left[\omega_y^{H|W}:\omega_y^{G|W}\right] + \theta\left[\omega_x^{E|H}:\omega_x^{G|W}\right] - \theta\left[\omega_x^{H|W}:\omega_x^{G|W}\right] + \theta\left[\omega_z^{E|H}:\omega_z^{G|W}\right] - \theta\left[\omega_z^{H|W}:\omega_z^{G|W}\right]}{\theta\left[\omega_y^{E|H}:\omega_y^{G|W}\right] + \theta\left[\omega_y^{H|W}:\omega_y^{G|W}\right] + \theta\left[\omega_x^{E|H}:\omega_x^{G|W}\right] + \theta\left[\omega_x^{H|W}:\omega_x^{G|W}\right] + \theta\left[\omega_z^{E|H}:\omega_z^{G|W}\right] + \theta\left[\omega_z^{H|W}:\omega_z^{G|W}\right]}$$

Another possibility is to make the horizontal and vertical astigmatism gradients dependent on the lens design parameters $\{\phi\} = (\phi_{hor}, \phi_{ver})$. The lens design parameters $\phi_{hor}$ and $\phi_{ver}$ control mainly the horizontal and vertical astigmatism gradients, respectively. They are derived from the model parameters $\{\theta\}$ as

$$\phi_{hor} = \frac{\theta\left[\omega_y^{E|H}:\omega_y^{G|W}\right] - \theta\left[\omega_y^{H|W}:\omega_y^{G|W}\right]}{\theta\left[\omega_y^{E|H}:\omega_y^{G|W}\right] + \theta\left[\omega_y^{H|W}:\omega_y^{G|W}\right]}$$

$$\phi_{ver} = \frac{\theta\left[\omega_x^{E|H}:\omega_x^{G|W}\right] - \theta\left[\omega_x^{H|W}:\omega_x^{G|W}\right]}{\theta\left[\omega_x^{E|H}:\omega_x^{G|W}\right] + \theta\left[\omega_x^{H|W}:\omega_x^{G|W}\right]}.$$

When one compares the progressive lens designs assigned to, calculated or optimised for two future wearers with the same addition, the wearer with a stronger horizontal head motion response to horizontal motion of the fixated object, which, in turn, leads to a lower value of $\phi_{hor}$, receives a lens with smaller horizontal astigmatism gradients than the wearer with a weaker horizontal head motion response. Conversely, the wearer with a stronger horizontal eye motion response to horizontal motion of the fixated object, which leads to a higher value of $\phi_{hor}$, receives a lens with larger horizontal astigmatism gradients than the wearer with a weaker horizontal eye motion response.

Additionally or alternatively, a wearer with a stronger horizontal head motion response to vertical motion of the fixated object, which leads to a lower value of $\phi_{ver}$, receives a lens with smaller vertical astigmatism gradients than the wearer with a weaker vertical head motion response. Conversely, the wearer with a stronger vertical eye motion response to vertical motion of the fixated object that leads to a higher value of $\phi_{ver}$ receives a lens with larger vertical astigmatism gradients than the wearer with a weaker vertical eye motion response.

If the z-components of the eye and head motion is accounted for, additional terms must be added to the numerator and denominator of the equation used to calculate $\phi_{hor}$ above: the difference (in the numerator) and the sum (in the denominator) of the z-components of the eye and head angular velocity.

In embodiments wherein eye tracking is not available and/or not reliable, or in tasks in which only a single stimulus is tracked, the gaze direction can be replaced with the stimulus direction in the same coordinate system the gaze direction is referred to. To this end, in all superscripts in the equations above the object indicator 'G' (for 'gaze') may be replaced by 'S' (for 'stimulus').

In exemplary viewing tasks in which the observer, e.g., the wearer, is allowed to move the torso, the variables referring to the gaze or stimulus properties in world coordinates may be replaced by respective variables in torso coordinates. To this end, in all superscripts in the equations above the object indicator 'W (for 'world') may be replaced by 'T' (for 'torso').

## Model Example 2: Advanced Anisotropic Motion-Related Gaze Behaviour Model

More advanced models than the model example 1 may quantify further aspects of gaze behaviour and can be formulated and used in the method as well. Different models may be tested to improve the prediction quality of the motion-related gaze behaviour by minimising the mean squared error of all modelled prediction targets evaluated on a validation data set. These more complex models may reveal more information about individual gaze behaviour that can be extracted from the measured data.

Generally, advanced anisotropic motion-related gaze behaviour model used for the method may comprise nonlinear features and/or features relating to a time delay. Applying such an advanced anisotropic motion-related gaze behaviour model to the detected gaze motion data may improve the understanding of the anisotropic, motion-related gaze behaviour and, in consequence, lead to the selection of a better suited lens design for the wearer.

One of these advanced models is exemplarily referred to a model example 2. The model example 2 relates to an advanced anisotropic motion-related gaze behaviour model and comprises a more complex model structure. While the prediction targets are the same as in the simple model example 1 disclosed above, the model example 2 contains more features, some of which are nonlinear and/or which depend on features that are delayed in time.

$$\widehat{\omega}_x^{E|H}\left(\omega_x^{G|W}\right) = \theta[.]\omega_x^{G|W} + \theta[.]\left(\omega_x^{G|W}\right)^3 + \theta[.]\left(\omega_x^{G|W}(t-\Delta t) - \omega_x^{G|W}(t)\right) + \theta[.]\left(\omega_x^{G|W} r_y^{H|W}\right)$$
$$+ \theta[.]\left(\omega_x^{G|W} r_x^{H|W}\right) + \theta[.]\left(\omega_x^{G|W} r_y^{E|H}\right) + \theta[.]\left(\omega_x^{G|W} r_x^{E|H}\right) + \theta[.]\left(\omega_x^{G|W}/d^{G|H}\right)$$

$$\widehat{\omega}_y^{E|H}\left(\omega_y^{G|W}\right) = \theta[.]\omega_y^{G|W} + \theta[.]\left(\omega_y^{G|W}\right)^3 + \theta[.]\left(\omega_y^{G|W}(t-\Delta t) - \omega_y^{G|W}(t)\right) + \theta[.]\left(\omega_y^{G|W} r_x^{H|W}\right)$$
$$+ \theta[.]\left(\omega_y^{G|W} r_y^{H|W}\right) + \theta[.]\left(\omega_y^{G|W} r_x^{E|H}\right) + \theta[.]\left(\omega_y^{G|W} r_y^{E|H}\right) + \theta[.]\left(\omega_y^{G|W}/d^{G|H}\right)$$

$$\widehat{\omega}_x^{H|W}\left(\omega_x^{G|W}\right) = \theta[.]\omega_x^{G|W} + \theta[.]\left(\omega_x^{G|W}\right)^3 + \theta[.]\left(\omega_x^{G|W}(t-\Delta t) - \omega_x^{G|W}(t)\right) + \theta[.]\left(\omega_x^{G|W} r_y^{H|W}\right)$$
$$+ \theta[.]\left(\omega_x^{G|W} r_x^{H|W}\right) + \theta[.]\left(\omega_x^{G|W} r_y^{E|H}\right) + \theta[.]\left(\omega_x^{G|W} r_x^{E|H}\right) + \theta[.]\left(\omega_x^{G|W}/d^{G|H}\right)$$

$$\widehat{\omega}_y^{H|W}\left(\omega_y^{G|W}\right) = \theta[.]\omega_y^{G|W} + \theta[.]\left(\omega_y^{G|W}\right)^3 + \theta[.]\left(\omega_y^{G|W}(t-\Delta t) - \omega_y^{G|W}(t)\right) + \theta[.]\left(\omega_y^{G|W} r_x^{H|W}\right)$$
$$+ \theta[.]\left(\omega_y^{G|W} r_y^{H|W}\right) + \theta[.]\left(\omega_y^{G|W} r_x^{E|H}\right) + \theta[.]\left(\omega_y^{G|W} r_y^{E|H}\right) + \theta[.]\left(\omega_y^{G|W}/d^{G|H}\right)$$

Non-instantaneous gaze behaviour is modelled with the time-delayed features of the form

$\left(\omega_u^{G|W}(t-\Delta t) - \omega_u^{G|W}(t)\right)$, where $u$ is a dummy subscript which will denote one of the coordinate directions $x$, $y$ or $z$ throughout this example. These features, referred to as 'time-delayed linear' features in the following, are constructed from the differences between the angular velocities of a measurement of a sample that has taken place $\Delta t$ before the measurement of the current sample at time $t$ (note that the time $t$ is omitted elsewhere but is nevertheless present). Useful time delays are in the range from 0.1 to 2 seconds and can be varied as a hyperparameter to find models best suitable to fit the observed data. The time delay was in this example $\Delta t = 0.25$ seconds.

Except for the linear features $\omega_u^{G|W}$ and the time-delayed linear features, all remaining features of the model are non-linear transformations of measurement variables.

With the nonlinear features of the form $\left(\omega_u^{G|W}\right)^3$ nonlinear instantaneous motion response is modelled. This is reasonable since faster motion of the fixated object (for example the stimulus) could be followed more with the eyes than with the head.

Deviations from constant motion responses are modelled with the features consisting of products of a component of the angular velocity and a direction vector or with the reciprocal distance of the binocularly fixated position, or, alternatively, of the stimulus distance. For example, the feature $\omega_y^{G|W} r_y^{E|H}$ and its corresponding model parameter

$\theta\left[v_u : \omega_y^{G|W} r_y^{E|H}\right]$ is used to quantify the differences of the responses of the target variable to horizontal motion of gaze (i.e. the component of the angular velocity vector that indicates rotation around the vertical y-axis) arising from a vertical displacement of the eyes (i.e. y-component of the eye direction vector in the head-fixed coordinate system).

The optimal model parameter vector $\{\theta\}$ containing 32 parameters in total is determined by solving the least squares problem with the same methods as applied in the model example 1.

In comparison to the simple viewing behaviour model of the previous model example 1, this advanced model example 2 reduces the validation mean squared error by approximately 30%, as determined by K-fold cross-validation on a dataset of 40 measurements in total. The measurements were obtained from five observers, each observer was being measured twice during tracking of a single fixation stimulus moving along four different random walk traces, where two pairs of the four traces were mirror images (mirrored at the vertical $(y,z)$-plane).

With more terms in the model, there are more ways of mapping the model parameters $\{\theta\}$ to lens design parameters. The model parameters corresponding to the linear instantaneous terms, $(\theta\left[\omega_x^{H|W} : \omega_x^{G|W}\right]$, $\theta\left[\omega_y^{H|W} : \omega_y^{G|W}\right]$, $\theta\left[\omega_x^{E|H} : \omega_x^{G|W}\right]$, and $\theta\left[\omega_y^{E|H} : \omega_y^{G|W}\right]$ can be used in a similar way as in the model example 1 to compute a lens design parameter to control the overall lens smoothness (see equation for $\phi_{cmb}$ from model example 1) as well as lens design parameters to control the horizontal and vertical astigmatism gradients (see equations for $\phi_{hor}$ and $\phi_{ver}$ from model example 1).

Another way to compute these parameters is to use also a linear transformation of the parameters of the linear instantaneous and linear time-delayed terms instead of the linear instantaneous terms above alone. Preferably, the transformation

$$\theta\left[v_u : \omega_u^{G|W}\right] + \frac{1}{2}\theta\left[v_u : \left(\omega_u^{G|W}(t-\Delta t) - \omega_u^{G|W}(t)\right)\right]$$

can be used, where $v_u$ denotes the optimisation target of interest, i.e. one of $\omega_u^{H|W}$, $\omega_u^{E|H}$ with $u$ being one of $x$, $y$, or $z$. For ease of notation, it can be rewritten in a more compact way by using the notation above as

$$\theta\left[v_u : \frac{1}{2}\left(\omega_u^{G|W}(t) + \omega_u^{G|W}(t-\Delta t)\right)\right] := \theta\left[v_u : \omega_u^{G|W}\right] + \frac{1}{2}\theta\left[v_u : \left(\omega_u^{G|W}(t-\Delta t) - \omega_u^{G|W}(t)\right)\right]$$

because of linearity of the terms in the model equations.

The alternative lens design parameters for astigmatism gradient control can be hence derived from these parameters as follows:

$$\phi_{cmb} = \frac{\begin{pmatrix} \theta\left[\omega_y^{E|H}:\frac{1}{2}\left(\omega_y^{G|W}(t)+\omega_y^{G|W}(t-\Delta t)\right)\right] - \theta\left[\omega_y^{H|W}:\frac{1}{2}\left(\omega_y^{G|W}(t)+\omega_y^{G|W}(t-\Delta t)\right)\right] + \\ \theta\left[\omega_x^{E|H}:\frac{1}{2}\left(\omega_x^{G|W}(t)+\omega_x^{G|W}(t-\Delta t)\right)\right] - \theta\left[\omega_x^{H|W}:\frac{1}{2}\left(\omega_x^{G|W}(t)+\omega_x^{G|W}(t-\Delta t)\right)\right] \end{pmatrix}}{\begin{pmatrix} \theta\left[\omega_y^{E|H}:\frac{1}{2}\left(\omega_y^{G|W}(t)+\omega_y^{G|W}(t-\Delta t)\right)\right] + \theta\left[\omega_y^{H|W}:\frac{1}{2}\left(\omega_y^{G|W}(t)+\omega_y^{G|W}(t-\Delta t)\right)\right] + \\ \theta\left[\omega_x^{E|H}:\frac{1}{2}\left(\omega_x^{G|W}(t)+\omega_x^{G|W}(t-\Delta t)\right)\right] + \theta\left[\omega_x^{H|W}:\frac{1}{2}\left(\omega_x^{G|W}(t)+\omega_x^{G|W}(t-\Delta t)\right)\right] \end{pmatrix}}$$

$$\phi_{hor} = \frac{\theta\left[\omega_y^{E|H}:\frac{1}{2}\left(\omega_y^{G|W}(t)+\omega_y^{G|W}(t-\Delta t)\right)\right] - \theta\left[\omega_y^{H|W}:\frac{1}{2}\left(\omega_y^{G|W}(t)+\omega_y^{G|W}(t-\Delta t)\right)\right]}{\theta\left[\omega_y^{E|H}:\frac{1}{2}\left(\omega_y^{G|W}(t)+\omega_y^{G|W}(t-\Delta t)\right)\right] + \theta\left[\omega_y^{H|W}:\frac{1}{2}\left(\omega_y^{G|W}(t)+\omega_y^{G|W}(t-\Delta t)\right)\right]}$$

$$\phi_{ver} = \frac{\theta\left[\omega_x^{E|H}:\frac{1}{2}\left(\omega_x^{G|W}(t)+\omega_x^{G|W}(t-\Delta t)\right)\right] - \theta\left[\omega_x^{H|W}:\frac{1}{2}\left(\omega_x^{G|W}(t)+\omega_x^{G|W}(t-\Delta t)\right)\right]}{\theta\left[\omega_x^{E|H}:\frac{1}{2}\left(\omega_x^{G|W}(t)+\omega_x^{G|W}(t-\Delta t)\right)\right] + \theta\left[\omega_x^{H|W}:\frac{1}{2}\left(\omega_x^{G|W}(t)+\omega_x^{G|W}(t-\Delta t)\right)\right]}.$$

The overall astigmatism gradients, as well as the horizontal and the vertical astigmatism gradients of the lens design depend on the lens design parameters $\phi_{comb}$, $\phi_{hor}$ and $\phi_{ver}$ as described in the example model 1.

Alternatively, or in addition to controlling the progressive lens design with one of the lens design parameters $\phi_{comb}$, $\phi_{hor}$ and $\phi_{ver}$, the lens design can be controlled by other lens design parameters derived from the gaze behaviour parameters of the interaction terms between angular velocity components and the directions of either head or eye:

$$\phi_{hor}^{(x)} = \frac{\begin{pmatrix} \sigma r_x^{E|H}\sigma r_x^{H|W}\theta\left[\omega_y^{E|H}:\omega_y^{G|W}r_x^{H|W}\right] + \sigma r_x^{E|H}\sigma r_x^{E|H}\theta\left[\omega_y^{E|H}:\omega_y^{G|W}r_x^{E|H}\right] - \\ \sigma r_x^{H|W}\sigma r_x^{H|W}\theta\left[\omega_y^{H|W}:\omega_y^{G|W}r_x^{H|W}\right] - \sigma r_x^{H|W}\sigma r_x^{E|H}\theta\left[\omega_y^{H|W}:\omega_y^{G|W}r_x^{E|H}\right] \end{pmatrix}}{\sigma r_x^{E|H}\sigma r_x^{H|W} + \sigma r_x^{E|H}\sigma r_x^{E|H} + \sigma r_x^{H|W}\sigma r_x^{H|W} + \sigma r_x^{H|W}\sigma r_x^{E|H}}$$

$$\phi_{hor}^{(y)} = \frac{\begin{pmatrix} \sigma r_x^{E|H}\sigma r_y^{H|W}\theta\left[\omega_y^{E|H}:\omega_y^{G|W}r_y^{H|W}\right] + \sigma r_x^{E|H}\sigma r_y^{E|H}\theta\left[\omega_y^{E|H}:\omega_y^{G|W}r_y^{E|H}\right] - \\ \sigma r_x^{H|W}\sigma r_y^{H|W}\theta\left[\omega_y^{H|W}:\omega_y^{G|W}r_y^{H|W}\right] - \sigma r_x^{H|W}\sigma r_y^{E|H}\theta\left[\omega_y^{H|W}:\omega_y^{G|W}r_y^{E|H}\right] \end{pmatrix}}{\sigma r_x^{E|H}\sigma r_y^{H|W} + \sigma r_x^{E|H}\sigma r_y^{E|H} + \sigma r_x^{H|W}\sigma r_y^{H|W} + \sigma r_x^{H|W}\sigma r_y^{E|H}}$$

$$\phi_{ver}^{(x)} = \frac{\begin{pmatrix} \sigma r_y^{E|H}\sigma r_x^{H|W}\theta\left[\omega_x^{E|H}:\omega_x^{G|W}r_x^{H|W}\right] + \sigma r_y^{E|H}\sigma r_x^{E|H}\theta\left[\omega_x^{E|H}:\omega_x^{G|W}r_x^{E|H}\right] - \\ \sigma r_y^{H|W}\sigma r_x^{H|W}\theta\left[\omega_x^{H|W}:\omega_x^{G|W}r_x^{H|W}\right] - \sigma r_y^{H|W}\sigma r_x^{E|H}\theta\left[\omega_x^{H|W}:\omega_x^{G|W}r_x^{E|H}\right] \end{pmatrix}}{\sigma r_y^{E|H}\sigma r_x^{H|W} + \sigma r_y^{E|H}\sigma r_x^{E|H} + \sigma r_y^{H|W}\sigma r_x^{H|W} + \sigma r_y^{H|W}\sigma r_x^{E|H}}$$

$$\phi_{ver}^{(y)} = \frac{\begin{pmatrix} \sigma r_y^{E|H}\sigma r_y^{H|W}\theta\left[\omega_x^{E|H}:\omega_x^{G|W}r_y^{H|W}\right] + \sigma r_y^{E|H}\sigma r_y^{E|H}\theta\left[\omega_x^{E|H}:\omega_x^{G|W}r_y^{E|H}\right] - \\ \sigma r_y^{H|W}\sigma r_y^{H|W}\theta\left[\omega_x^{H|W}:\omega_x^{G|W}r_y^{H|W}\right] - \sigma r_y^{H|W}\sigma r_y^{E|H}\theta\left[\omega_x^{H|W}:\omega_x^{G|W}r_y^{E|H}\right] \end{pmatrix}}{\sigma r_y^{E|H}\sigma r_y^{H|W} + \sigma r_y^{E|H}\sigma r_y^{E|H} + \sigma r_y^{H|W}\sigma r_y^{H|W} + \sigma r_y^{H|W}\sigma r_y^{E|H}}$$

The lens design parameters $\phi_{hor}^{(x)}$, $\phi_{hor}^{(y)}$, $\phi_{ver}^{(x)}$ and $\phi_{ver}^{(y)}$ depend in addition to the model parameters also on the standard deviations of the x-, y- and z-components of the eye and head direction, which act as weights that decrease the influence of model parameters determined with low accuracy.

The lens design parameters $\phi_{hor}^{(x)}$, $\phi_{hor}^{(y)}$, $\phi_{ver}^{(x)}$ and $\phi_{ver}^{(y)}$ correspond to the preference to follow the horizontal and vertical motion components of a fixated object with the eyes when the fixation is accomplished with a deflection of the eyes and/or the head into the direction indicated by the superscripts (*x*) and (*y*). They can be used to asymmetrically control the astigmatism gradients at the periphery of the far and near zones of good vision, as well as to control the relative size of the zones of good vision.

For example, a positive value of $\phi_{hor}^{(y)}$ indicates that the preference to follow a fixated horizontally moving object with the eyes increases when the object is located in the positive y-direction, which corresponds to 'up'. A positive/negative parameter value is hence used to provide a progressive lens with increased/decreased horizontal astigmatism gradients in the far vision zone, which can correspond to a wider/narrower viewing zone, while the horizontal astigmatism gradients in the near vision zone of the lens are reduced/increased to account for the preference of stronger/weaker head motion response to a moving stimulus while looking down, which can correspond to a smaller/larger near viewing zone.

A positive value of $\phi_{ver}^{(x)}$ indicates that the preference to follow a fixated object moving vertically with the eyes increases when the object is located in the positive x-direction, which is 'left'. A positive/negative parameter value is hence used to provide a progressive lens with increased/reduced vertical astigmatism gradients in the left part of the lens, while the vertical astigmatism gradients in the right part of the lens are reduced/increased to account for the stronger/weaker preference to follow vertical movements of the fixated object with the head if it is located on the right side of the lens. The changes of the vertical astigmatism gradients can result in a lens with slightly higher unwanted astigmatism distribution on the left side of the lens, and slightly lower unwanted astigmatism on the right side of the lens.

A positive value of $\phi_{hor}^{(x)}$ indicates that the preference to follow a horizontally moving fixated object with the eyes increases when the object is located in the positive x-direction, which is 'left'. A positive/negative parameter value is hence used to provide a progressive lens that has increased/reduced horizontal astigmatism gradients on the left side and reduced/increased horizontal astigmatism gradients on the right side of the lens. This can result in a progressive lens that is softer on the left side of the progression channel and harder on the right side of the progression channel.

A positive value of $\phi_{ver}^{(y)}$ indicates that the preference to follow a fixated object moving vertically with the eyes increases when the object is located in the positive y-direction, which corresponds to 'up'. A positive/negative parameter value is hence used to provide a progressive lens with a progression zone located at a lower/higher position in the lens, which results in a higher/lower far vision zone and a lower/higher near vision zone, which accounts for the preference to follow vertical movements of an object stronger with the eyes when the fixated object is located in the direction 'up'.

Additionally, or alternatively, it is also possible to control astigmatism gradients of the lens by considering individually different dependency of the viewing behaviour on the distance or the reciprocal distance of the fixated object (the so-called proximity). To this end, the model parameters $\theta\left[v_u : \omega_u^{G|W}/d^{G|H}\right]$ can be used to control astigmatism gradients of the lens by defining the lens design parameters $\phi_{hor}^{(1/d)}$ and $\phi_{ver}^{(1/d)}$. For example, a proximity-dependent lens design parameter can be defined as

$$\phi_{hor}^{(1/d)} = \frac{\theta\left[\omega_y^{E|H} : \omega_y^{G|W}/d^{G|H}\right] - \theta\left[\omega_y^{H|W} : \omega_y^{G|W}/d^{G|H}\right]}{\theta\left[\omega_y^{E|H} : \omega_y^{G|W}/d^{G|H}\right] + \theta\left[\omega_y^{H|W} : \omega_y^{G|W}/d^{G|H}\right]}$$

$$\phi_{ver}^{(1/d)} = \frac{\theta\left[\omega_x^{E|H} : \omega_x^{G|W}/d^{G|H}\right] - \theta\left[\omega_x^{H|W} : \omega_x^{G|W}/d^{G|H}\right]}{\theta\left[\omega_x^{E|H} : \omega_x^{G|W}/d^{G|H}\right] + \theta\left[\omega_x^{H|W} : \omega_x^{G|W}/d^{G|H}\right]}.$$

A positive value of the parameters $\phi_{hor}^{(1/d)}$ and $\phi_{ver}^{(1/d)}$ corresponds to stronger eye motion response to the motion of the fixated object in the horizontal and vertical directions, respectively, when the object is close (i.e. for high proximity values 1/*d*) in comparison to when the object is far away (i.e. proximity value 1/*d* close to zero).

Conversely, negative values of these parameters correspond to stronger head motion response. To account for this a lens design can be provided that possesses lower astigmatism gradients along the respective directions when the parameter values are below average, and vice versa. This, in turn, can also lead to different relative sizes of the far and near viewing zones similar to the effect of the parameters $\phi_{hor}^{(x)}, \phi_{hor}^{(y)}, \phi_{ver}^{(x)}$ and $\phi_{ver}^{(y)}$ mentioned above.

Additionally, or alternatively, time delayed model parameters obtained with a viewing behaviour model can be used to control the horizontal and vertical astigmatism gradients such that observers whose head motion response is lagging stronger than average (i.e. shows a stronger than average time-delayed component) will receive designs with lower astigmatism gradients. Since the lagging of the head motion can depend on the movement direction of the fixated object, horizontal and vertical astigmatism gradients can be accounted for separately and hence lead to separate modifications of the lens design. For example, the viewing behaviour model parameters

$$\theta \left[ v_u : \left( \omega_u^{G|W}(t - \Delta t) - \omega_u^{G|W}(t) \right) \right]$$ can be used to control the horizontal and vertical astigmatism gradients by defining the lens design parameters $\phi_{hor}^{(\Delta t)}$ and $\phi_{ver}^{(\Delta t)}$.

For example, $\phi_{hor}^{(\Delta t)}$ and $\phi_{ver}^{(\Delta t)}$ can be set to be equal to the negative of the respective linear time-delayed viewing behaviour model parameters:

$$\phi_{hor}^{(\Delta t)} = -\theta \left[ \omega_y^{H|W} : \left( \omega_y^{G|W}(t - \Delta t) - \omega_y^{G|W}(t) \right) \right]$$

$$\phi_{ver}^{(\Delta t)} = -\theta \left[ \omega_x^{H|W} : \left( \omega_x^{G|W}(t - \Delta t) - \omega_x^{G|W}(t) \right) \right].$$

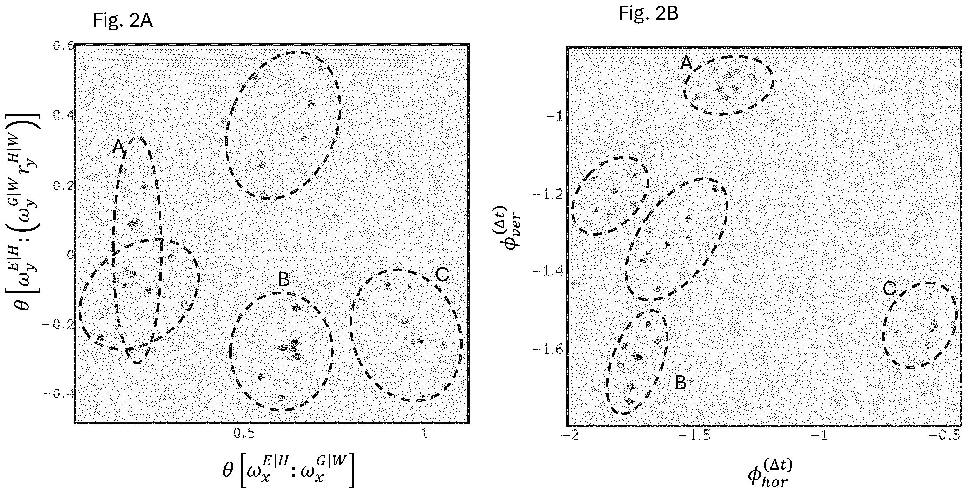

Alternatively, the following lens design parameters can be defined, which merge the lagging head motion and the motion of the eyes while fixating an object and moving the head (see also Fig. 2B):

$$\phi_{hor}^{(\Delta t)} = \theta \left[ \omega_y^{E|H} : \left( \omega_y^{G|W}(t - \Delta t) - \omega_y^{G|W}(t) \right) \right] - \theta \left[ \omega_y^{H|W} : \left( \omega_y^{G|W}(t - \Delta t) - \omega_y^{G|W}(t) \right) \right]$$

$$\phi_{ver}^{(\Delta t)} = \theta \left[ \omega_x^{E|H} : \left( \omega_x^{G|W}(t - \Delta t) - \omega_x^{G|W}(t) \right) \right] - \theta \left[ \omega_x^{H|W} : \left( \omega_x^{G|W}(t - \Delta t) - \omega_x^{G|W}(t) \right) \right].$$

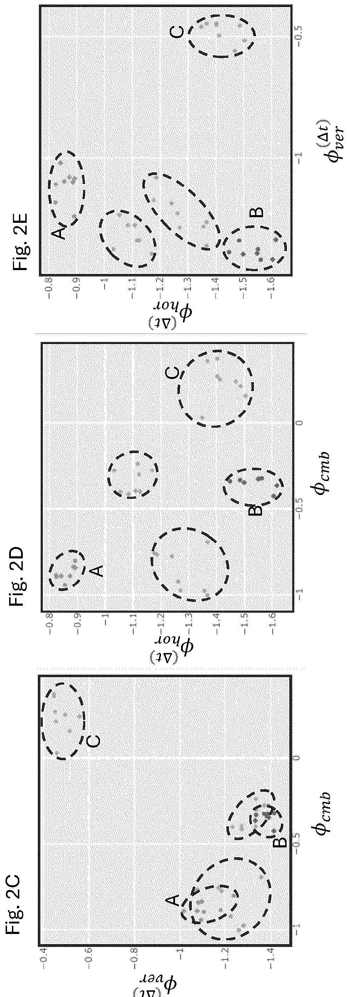

Yet another possibility to define these parameters is to normalise them, which may lead to more stable parameter values in the case of excess measurement noise (see also Fig. 2C-E):

$$\phi_{hor}^{(\Delta t)} = \frac{\theta \left[ \omega_y^{E|H} : \left( \omega_y^{G|W}(t - \Delta t) - \omega_y^{G|W}(t) \right) \right] - \theta \left[ \omega_y^{H|W} : \left( \omega_y^{G|W}(t - \Delta t) - \omega_y^{G|W}(t) \right) \right]}{-\theta \left[ \omega_y^{E|H} : \left( \omega_y^{G|W}(t - \Delta t) - \omega_y^{G|W}(t) \right) \right] - \theta \left[ \omega_y^{H|W} : \left( \omega_y^{G|W}(t - \Delta t) - \omega_y^{G|W}(t) \right) \right]}$$

$$\phi_{ver}^{(\Delta t)} = \frac{\theta \left[ \omega_x^{E|H} : \left( \omega_x^{G|W}(t - \Delta t) - \omega_x^{G|W}(t) \right) \right] - \theta \left[ \omega_x^{H|W} : \left( \omega_x^{G|W}(t - \Delta t) - \omega_x^{G|W}(t) \right) \right]}{-\theta \left[ \omega_x^{E|H} : \left( \omega_x^{G|W}(t - \Delta t) - \omega_x^{G|W}(t) \right) \right] - \theta \left[ \omega_x^{H|W} : \left( \omega_x^{G|W}(t - \Delta t) - \omega_x^{G|W}(t) \right) \right]}$$

A distinct lagging head motion in the respective movement direction of the fixated stimulus component will lead to negative values of $\phi_{hor}^{(\Delta t)}$ and $\phi_{ver}^{(\Delta t)}$ in either of the definitions above. If these lens design parameters have below-average values for an observer, the lens design can be calculated or chosen to have lower astigmatism gradients in the horizontal and vertical directions, respectively.

A favourable choice of lens design parameters in which different observers can be particularly well separated, for example the choice of $\{\phi\} = \left( \phi_{cmb}, \phi_{hor}^{(\Delta t)} \right)$ (see Fig. 2D). These parameters allow for control of the average residual astigmatism gradients of the design dependent on the value of $\phi_{cmb}$, and control of horizontal residual astigmatism gradients dependent on $\phi_{hor}^{(\Delta t)}$. Below-average parameter values of $\phi_{cmb}$ and $\phi_{hor}^{(\Delta t)}$ lead to smaller overall astigmatism gradients, and to smaller horizontal astigmatism gradients, respectively.

## Parameterisation of Lens Objective Functions and Mapping Functions

Typically, the objective function used in the calculation or optimisation of spectacle lenses specifies the desired refractive power and the unwanted astigmatism of the lens by defining so-called target functions. These functions determine the amount of relative power and residual astigmatism of the lens as a function of the position in the lens, which, in turn, depends on the line of sight. To this end, the objective functions have usually target values that depend on the position in which the line of sight intersects the lens for different viewing directions, or they are directly dependent on the direction of viewing. In addition, the objective functions are oftentimes multiplied with weights that depend on the viewing direction and summed thereafter over the evaluation sites on the lens to calculate a scalar optimization target.

According to the invention, the lens design parameters $\{\phi\}$ derived from the viewing behaviour parameters $\{\theta\}$, the latter also referred to as gaze motion parameters or anisotropic gaze motion parameters, modify the objective function by parameterizing at least one term of the objective function. The derivation may be done by the mapping function.

For example, an objective function $F(E, P, \{\phi\}, ...)$ can be defined as a weighted sum over a set $E$ of evaluation points on the lens, $(x_i, y_i)$, in which the properties $p(.)$ taken from a set of properties, $P$, of the lens and/or of the lens as part of an optical system are defined,

$$F(E, P, \{\phi\}, ...) = \sum_{p(.) \in P} \sum_{(x_i, y_i) \in E} w_p(x_i, y_i; \{\phi\}, ...) \left( p(x_i, y_i; ...) - p_{target}(x_i, y_i; \{\phi\}, ...) \right)^2,$$

the properties $p(x_i, y_i; ...)$ being evaluated at the evaluation points $(x_i, y_i)$ at which they are supposed to approach the target values $p_{target}(x_i, y_i; \{\phi\}, ...)$ during optimisation, which, in turn, depend on the lens design parameters. Two properties for which target functions are defined are the residual refraction error and the absolute value of the residual astigmatism. The weights $w_p(x_i, y_i; \{\phi\}, ...)$, which may also depend on the evaluation position and the lens design parameters $\{\phi\}$, determine the relative importance of reaching the desired target values of the different properties at each evaluation position. The dots (...) denote other parameters the target functions possibly dependent on. The lens is optimised thereafter by varying the lens surface as to minimize the objective function $F(E, P, \{\phi\}, ...)$.

A possible parameterisation of the target functions $p_{target}(x_i, y_i; \{\phi\}, ...)$ and/or the weight functions $w_p(x_i, y_i; \{\phi\}, ...)$ can be accomplished by defining the respective functions to be dependent on the behaviour-based lens design parameters $\{\phi\}$. For example, to make the objective function dependent on the behaviour-based lens design parameters $\{\phi\}$, terms for the horizontal and/or vertical components of the gradient of the residual astigmatism, and/or for the absolute value of the gradient of the residual astigmatism can be included in the sum above in addition to or alternatively to the target functions for the residual astigmatism.

Another way to achieve the desired personalisation is to modify the target function $\Delta A'_{target}(x_i, y_i; ...)$ of the residual astigmatism $\Delta Ast$ used to optimise state of the art lenses depending on the viewing behaviour-based lens design parameters $\{\phi\}$. The modified target function $\Delta A_{target}(x_i, y_i; \{\phi\}, ...)$ is used then instead of the state-of-the-art target function as a term in the objective function. A possible transformation is given by

$$\Delta A_{target}(x_i, y_i; \{\phi\}, ...) = \Delta A_{min} + (\Delta A_{max} - \Delta A_{min})\sigma \left[ \text{logit} \left( \frac{\Delta A'_{target}(x_i, y_i; ...) - \Delta A_{min}}{\Delta A_{max} - \Delta A_{min}} \right) a(\{\phi\}) \right],$$

where $\Delta A_{max}$ and $\Delta A_{min}$ are the maximum and minimum values of the state-of-the-art target function of the residual astigmatism to be modified, $\text{logit}(x) = \ln(x/(1 - x))$ is the inverse of the standard logistic function $\sigma(x) = 1/(1 - \exp(-x))$, and $a(\{\phi\})$ is a coefficient that depends on the behaviour-based lens design parameters $\{\phi\}$. The latter can be set to a function that takes a standard value, for example 1, if the viewing behaviour-derived lens design parameter has a standard value. To this end, the coefficient can be set to $a(\{\phi\}) = \exp(\alpha(\phi_{cmb} - \overline{\phi_{cmb}}))$, which accomplishes that the target function of the residual astigmatism will have higher gradients when the lens design parameter $\phi_{cmb}$ of an observer is above a standard value $\overline{\phi_{cmb}}$ and when $\alpha > 0$. When $\alpha$ is negative, the influence on the design is reversed. The threshold $\overline{\phi_{cmb}}$ can be set to the average value of $\phi_{cmb}$ in a population of observers. The value of $\alpha$ can be any positive value, for example 1, but it is preferably chosen to create lens design changes that are reasonable for the range of values of the parameter $\phi_{cmb}$ observed in a population of observers. Alternatively, the viewing behaviour-based lens design parameter can take only positive or only negative values, and $a(\{\phi\})$ can be set for example to be proportional to the lens design parameter, or proportional to a power of the lens design parameter.

Additionally, or alternatively, the weight function of the residual astigmatism term can be modified in a similar way,

$$w_{\Delta A}(x_i, y_i; \{\phi\}, \dots) = w_{\Delta A,min} + \left(w_{\Delta A,max} - w_{\Delta A,min}\right)\sigma\left[\text{logit}\left(\frac{w'_{\Delta A}(x_i, y_i; \dots) - w_{\Delta A,min}}{w_{\Delta A,max} - w_{\Delta A,min}}\right)b(\{\phi\})\right],$$

where $w_{\Delta A,max}$ and $w_{\Delta A,min}$ are the maximum and minimum values of the state-of-the-art target weight function of the residual astigmatism to be modified, $w'_{\Delta A}(x_i, y_i; \dots)$. The coefficient $b(\{\phi\})$ is a function of the viewing-behaviour derived lens design parameters $\{\phi\}$ and controls how abruptly the weights change between high weight regions and low weight regions in the lens. It can be set to a function that takes a standard value, for example 1, if the viewing behaviour-derived lens design parameter has a standard value. To this end, it can be set to $b(\{\phi\}) = \exp(\beta(\phi_{cmb} - \overline{\phi_{cmb}}))$, which leads to more abrupt changes and thus to higher gradients of the residual astigmatism when the lens design parameter $\phi_{cmb}$ of an observer is above the threshold $\overline{\phi_{cmb}}$ and when $\beta > 0$. The reverse is true when $\beta < 0$.

The coefficients $a(\{\phi\})$ and $b(\{\phi\})$ above can be limited to a specified range so that there is also a limited range of possible modifications of the lens designs caused by any possible value(s) of the viewing behaviour-derived lens design parameters $\{\phi\}$. The limits can be hard limits, which means that the coefficient is replaced with a minimum or maximum value if the originally calculated coefficient value is below or above these minimum or maximum values, respectively). Alternatively, the limits can be soft limits, which means that it is replaced with the value of a smooth function with a limited range of values applied to the originally calculated coefficient value.

Yet another way to personalise lens designs dependent on the viewing behaviour of the future wearer is to modify the parameters that are used to control the lens design used in state-of-the-art lens calculation or optimisation methods dependent on viewing behaviour-derived lens design parameters $\{\phi\}$ and/or viewing behaviour parameters $\{\theta\}$. State-of-the-art parameters to be modified can be for example the progression length, the positions of the zones of good vision, the slope of the power addition in the intermediate vision zone, a design characteristic, a lens hardness parameter, or any other parameter commonly used to control the design of ophthalmic lenses used during lens calculation. To this end, state-of-the-art lens design parameters are modified to be functions of the viewing behaviour derived lens design parameters $\{\phi\}$, and/or functions of the viewing behaviour parameters $\{\theta\}$.

For example, the progression length can be scaled depending on the lens design parameter $\phi_{cmb}$ to be longer when the lens design parameter $\phi_{cmb}$ of an individual observer is higher, which is caused by a stronger overall motion response of the head velocity to the velocity of the fixated object. The progression length can be for example set to

$$PL(\phi_{cmb}) = \min(\max(PL_0 + (\phi_{cmb} + 0.7) \cdot 4.3\text{mm}, PL_{min}), PL_{max}),$$

with for example $PL_{min}$ = 12mm and $PL_{max}$ = 20mm, and $PL_0$ = 16mm.

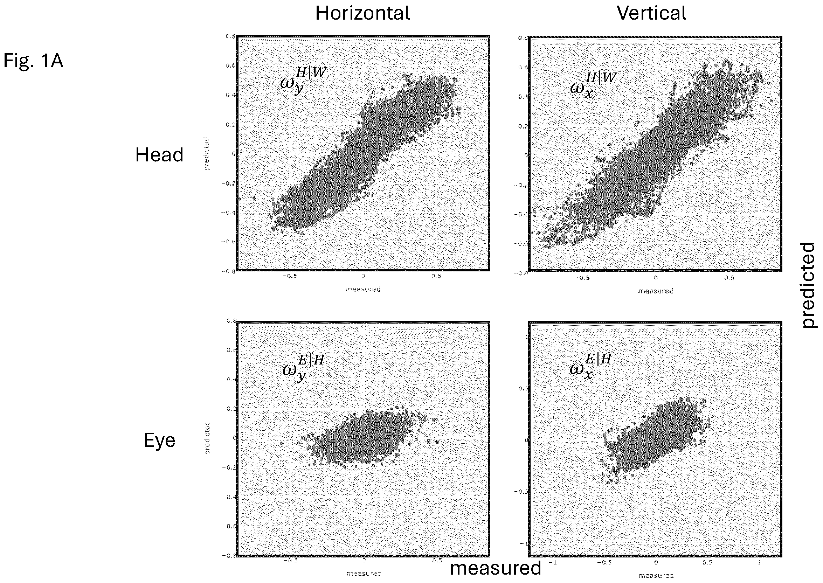

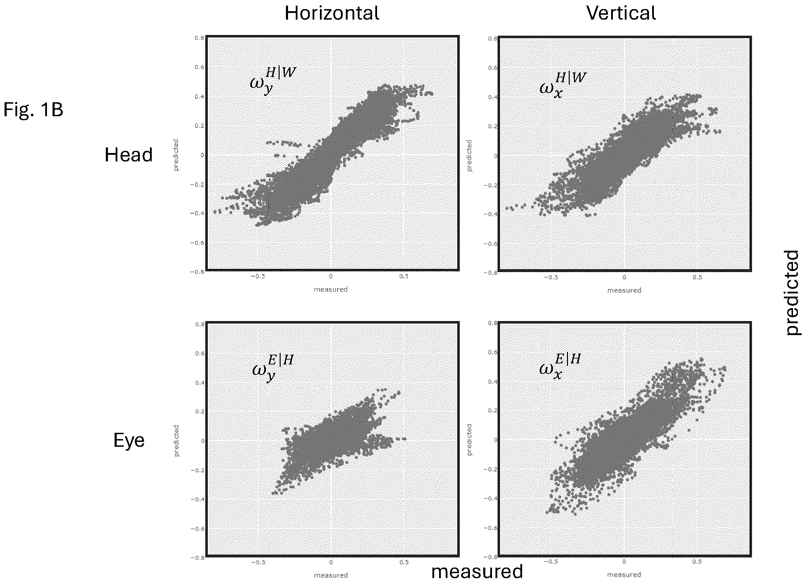

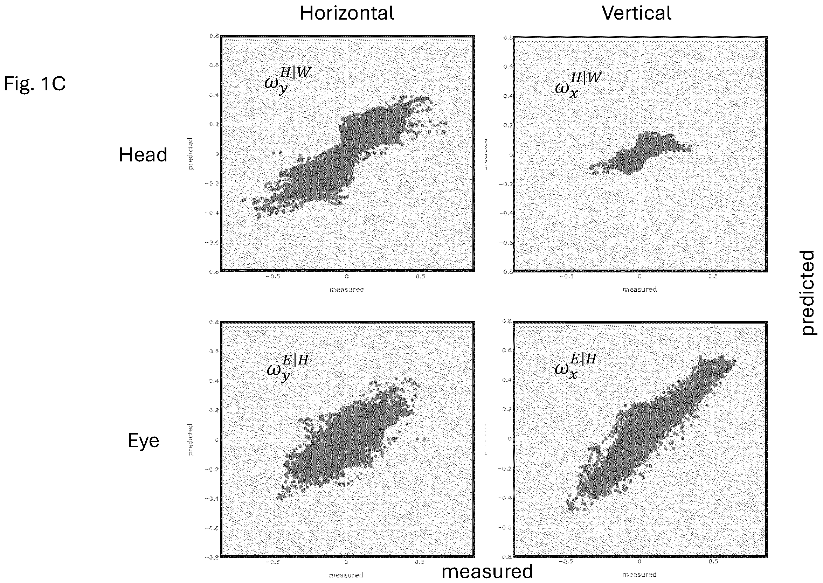

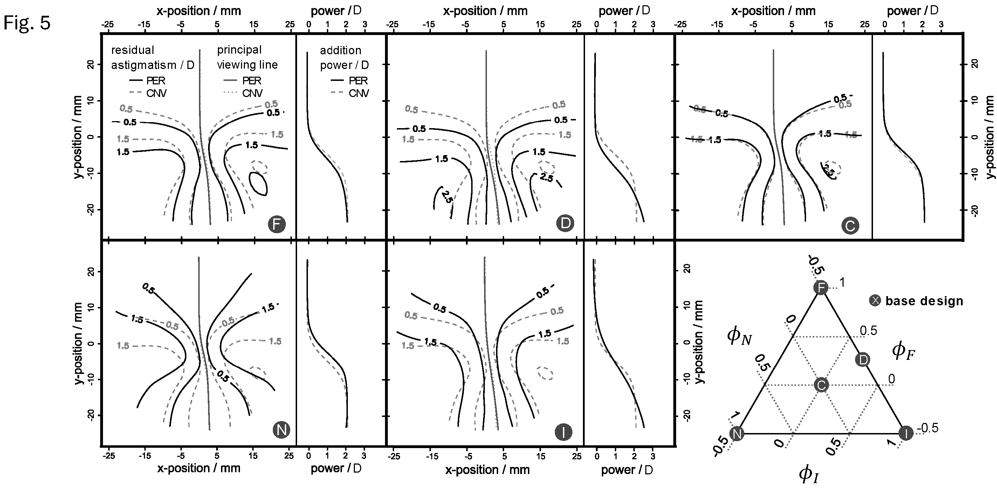

In yet another example, progressive lenses are personalised by modifying the so-called design characteristics to be dependent on the viewing behaviour-based lens design parameters $\{\phi\} = (\phi_{cmb}, \phi_{hor}^{(y)})$. The design characteristic is a barycentric coordinate system of progressive lens designs (see Figure 5 of this document, or Figure 1 and Table 2 found in Forkel & Reiniger, et al., Optom Vis Sci. 2017 Feb;94(2):208-218. doi: 10.1097/OPX.0000000000001016).

Briefly speaking, the designs close to the label "C" in Fig. 5 (and 4) are designs with balanced astigmatism gradients, the progressive lens designs close to the labels "D" and "I" have low overall astigmatism gradients, whereas the designs close to the labels "N" and "F" have higher overall astigmatism gradients.

The horizontal astigmatism gradients in the far and near viewing zones differ as well: there are very low horizontal astigmatism gradients in the far viewing zone for designs close to the labels "F" and "D", whereas for designs close to the labels "C", "I" and "N" the horizontal astigmatism gradients in the far viewing zone are stronger, with the design "N" having the strongest horizontal astigmatism gradients in the far viewing zone. In the near viewing zone, designs close to the label "N" have the lowest horizontal astigmatism gradients, which become gradually stronger for designs close to the labels "I", "C", "D", and "F".

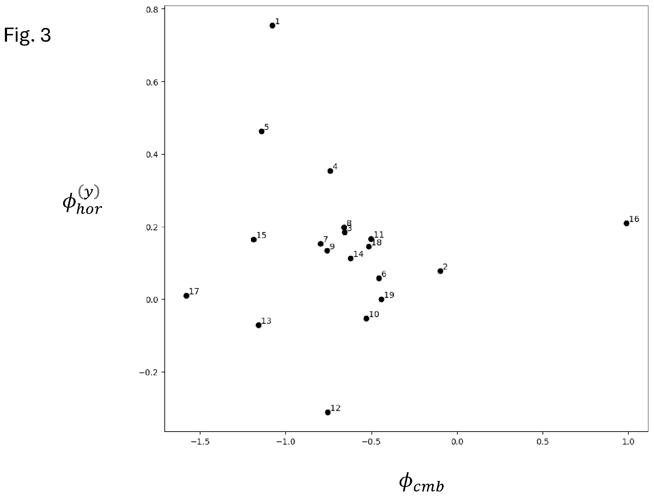

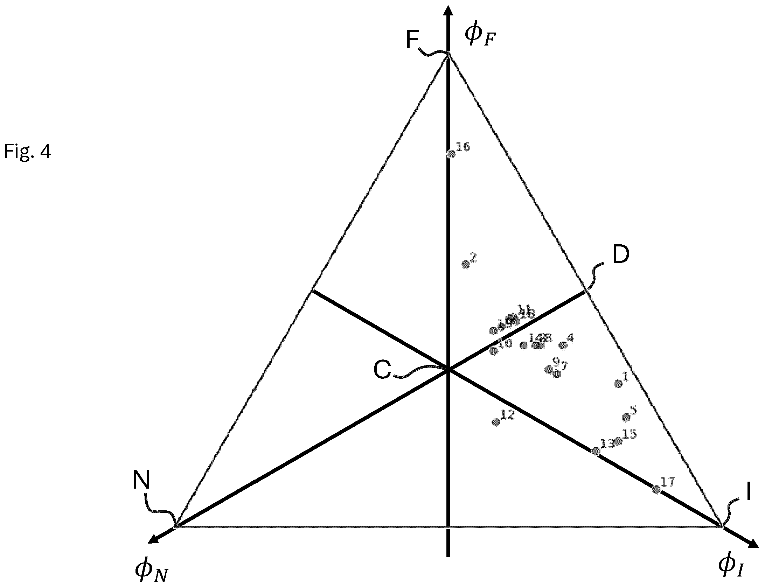

In the following, the design characteristic components of the far, intermediate and near viewing zone are referred to by $\phi_F$, $\phi_I$, and $\phi_N$, respectively. The design characteristic components, e.g., the lens design parameters, shown in Figure 4 are calculated based on the viewing behaviour-based lens design parameters $\phi_{cmb}$ and $\phi_{hor}^{(y)}$ shown in Figure 3 by

$$(z_F, z_I, z_N) = \left(\left(\phi_{cmb}, \phi_{hor}^{(y)}\right)\begin{bmatrix} 1 & -1 \\ 1 & 1 \end{bmatrix} + (0.8, -0.3)\right)\begin{bmatrix} 1 & -1/2 & \dfrac{1}{2\sqrt{3}} \\ 0 & -1/2 & -\dfrac{1}{2\sqrt{3}} \end{bmatrix}$$

$$(\phi_F, \phi_I, \phi_N) = 0.91 \cdot \frac{(\exp z_F, \exp z_I, \exp z_N)}{\exp z_F + \exp z_I + \exp z_N}.$$

As it can be easily seen from figures 3 and 4, observers with above average $\phi_{cmb}$ values (e.g. observer #16) are mapped to, and thus provided with, lens designs that have relatively strong overall astigmatism gradients but large far and near viewing zones to account for the stronger eye motion response to motion of the fixated object.

Observers with below average $\phi_{cmb}$ values (e.g. observer #17) are equipped with and/or are mapped to lens designs with low overall astigmatism gradients. Observers with above average $\phi_{hor}^{(y)}$ values and hence horizontal stronger eye motion response to fixated objects moving horizontally in the upper gaze direction get and/or are mapped to lens designs with wider far viewing zones (e.g. observers #1 and #4), whereas observers with the opposite viewing behaviour get and/or are mapped to designs in which the horizontal astigmatism gradients in the far and near viewing zones are higher and lower, respectively, as shown, e.g., for observer #12.

Table 1 shows values of anisotropic gaze motion parameters, also referred to as viewing behaviour model parameter values, obtained by fitting measurement data with a motion-related gaze behaviour model described above as the model example 2. Parameter values for three different observers are shown. The parameter values of observer A are shown in column A of table 1 and in Fig. 1A. Observer A shows a strong head motion response and a weak eye motion response. The parameter values of observer B are shown in column B of table 1 and in Fig. 1B. Observer B shows intermediate head motion and eye motion responses. The parameter values of observer C are shown in column C of table 1 and in Fig. 1C. Observer C shows a weak head motion response and strong eye motion response.

| Table 1 | | | | |
|---|---|---|---|---|
| Target | Parameter / Term | Parameter value for observer | | |
| | | A | B | C |
| vertical head motion response | $\theta\left[\omega_x^{H\|W} : \omega_x^{G\|W}\right]$ | 1.056490 | 0.701276 | 0.348802 |
| | $\theta\left[\dot{\omega}_x^{H\|W} : \left(\dot{\omega}_x^{G\|W}\right)^3\right]$ | -0.431910 | 0.076421 | -0.524481 |
| | $\theta\left[\omega_x^{H\|W} : \left(\omega_x^{G\|W}(t-\Delta t) - \omega_x^{G\|W}(t)\right)\right]$ | 0.601680 | 0.786360 | 0.222843 |
| | $\theta\left[\omega_x^{H\|W} : \left(\omega_x^{G\|W} r_v^{H\|W}\right)\right]$ | 0.301520 | 0.390104 | 0.633071 |
| | $\theta\left[\omega_x^{H\|W} : \left(\omega_x^{G\|W} r_x^{H\|W}\right)\right]$ | -0.010381 | -0.006149 | 0.002419 |
| | $\dot{\theta}\left[\omega_x^{H\|W} : \omega_x^{G\|W} \dot{r}_v^{E\|H}\right]$ | 0.740420 | -0.075495 | 0.090625 |
| | $\theta\left[\omega_x^{H\|W} : \left(\omega_x^{G\|W} r_x^{E\|H}\right)\right]$ | -0.316698 | 0.282131 | -0.061963 |
| | $\theta\left[\omega_x^{H\|W} : \left(\omega_x^{G\|W} / d^{G\|H}\right)\right]$ | 0.011653 | -0.074487 | 0.034206 |
| | $\theta\left[\omega_v^{H\|W} : \omega_v^{G\|W}\right]$ | 1.100965 | 0.885822 | 0.639468 |
| | $\theta\left[\omega_y^{H\|W} : \left(\omega_y^{G\|W}\right)^3\right]$ | -0.462741 | 0.343836 | 0.756887 |
| | $\theta\left[\dot{\omega}_y^{H\|W} : \left(\dot{\omega}_y^{G\|W}(t-\Delta t) - \dot{\omega}_y^{G\|W}(t)\right)\right]$ | 0.411007 | 0.779075 | 0.779538 |

(continued)

| Target | Parameter / Term | Parameter value for observer | | |
|---|---|---|---|---|
| | | A | B | C |
| horizontal head motion response | $\theta\left[\omega_v^{H\mid W}:\left(\omega_v^{G\mid W} r_x^{H\mid W}\right)\right]$ | -0.089777 | -0.009430 | 0.160448 |
| | $\theta\left[\omega_v^{H\mid W}:\left(\omega_v^{G\mid W} r_v^{H\mid W}\right)\right]$ | -0.041044 | -0.252936 | 0.585925 |
| | $\theta\left[\omega_v^{H\mid W}:\left(\omega_v^{G\mid W} r_x^{E\mid H}\right)\right]$ | -0.132930 | -0.076412 | 0.007167 |
| | $\theta\left[\omega_v^{H\mid W}:\left(\omega_v^{G\mid W} r_v^{E\mid H}\right)\right]$ | -0.167997 | 0.114739 | 0.013078 |
| | $\theta\left[\omega_v^{H\mid W}:\left(\omega_v^{G\mid W}/d^{G\mid H}\right)\right]$ | -0.084164 | -0.067334 | 0.020349 |
| vertical eye motion response | $\theta\left[\omega_x^{E\mid H}:\omega_x^{G\mid W}\right]$ | 0.181836 | 0.527745 | 0.847190 |
| | $\theta\left[\omega_x^{E\mid H}:\left(\omega_x^{G\mid W}\right)^3\right]$ | -0.484844 | -0.921834 | -0.376544 |
| | $\theta\left[\omega_x^{E\mid H}:\left(\omega_x^{G\mid W}(t-\Delta t)-\omega_x^{G\mid W}(t)\right)\right]$ | -0.692906 | -0.880787 | -0.301727 |
| | $\theta\left[\omega_x^{E\mid H}:\left(\omega_x^{G\mid W} r_v^{H\mid W}\right)\right]$ | -0.422158 | -0.467591 | -0.970270 |
| | $\theta\left[\omega_x^{E\mid H}:\left(\omega_x^{G\mid W} r_x^{H\mid W}\right)\right]$ | 0.003636 | 0.008254 | 0.091459 |
| | $\theta\left[\omega_x^{E\mid H}:\omega_x^{G\mid W} r_v^{E\mid H}\right]$ | -0.638344 | 0.146114 | -0.014277 |
| | $\theta\left[\omega_x^{E\mid H}:\left(\omega_x^{G\mid W} r_x^{E\mid H}\right)\right]$ | 0.630672 | 0.092872 | -0.111252 |
| | $\theta\left[\omega_x^{E\mid H}:\left(\omega_x^{G\mid W}/d^{G\mid H}\right)\right]$ | -0.089756 | 0.032612 | -0.043894 |
| | $\theta\left[\omega_v^{E\mid H}:\omega_v^{G\mid W}\right]$ | -0.002208 | 0.233482 | 0.544838 |
| | $\theta\left[\omega_y^{E\mid H}:\left(\omega_y^{G\mid W}\right)^3\right]$ | 0.160470 | -0.582947 | -0.845881 |
| horizontal eye | $\theta\left[\omega_y^{H\mid W}:\left(\omega_y^{E\mid H}(t-\Delta t)-\omega_y^{G\mid W}(t)\right)\right]$ | -0.454009 | -0.810992 | -0.822393 |
| | $\theta\left[\omega_v^{E\mid H}:\left(\omega_x^{G\mid W} r_x^{H\mid W}\right)\right]$ | 0.081274 | -0.008910 | -0.146075 |
| motion response | $\theta\left[\omega_v^{E\mid H}:\left(\omega_v^{G\mid W} r_v^{H\mid W}\right)\right]$ | 0.006566 | 0.168247 | -0.346259 |
| | $\theta\left[\omega_v^{E\mid H}:\left(\omega_v^{G\mid W} r_x^{E\mid H}\right)\right]$ | 0.366992 | 0.237241 | -0.045491 |
| | $\theta\left[\omega_v^{H\mid W}:\left(\omega_v^{G\mid W} r_v^{E\mid H}\right)\right]$ | -0.326311 | -0.429416 | -0.301618 |
| | $\theta\left[\omega_v^{H\mid W}:\left(\omega_v^{G\mid W}/d^{G\mid H}\right)\right]$ | -0.045834 | -0.060615 | -0.083214 |

**Figures 1A, 1B and 1C** show plots of the measured (horizontal plot axes) and predicted (vertical plot axes) y and x components (left and right subplot columns) of the angular velocities of the head and the eyes (upper and bottom row) of observer A, B, and C, respectively.

The viewing behaviour model used to predict the angular velocity components resulted in the viewing behaviour parameter values tabulated in the above Table 1.

**Generalisation From the Measurement Task to Other Tasks**

To train a model that generalises well from the visual task during measurement to other tasks, especially to visual tasks the lenses will be personalised to, i.e. in which they will be used by the future wearer, it is advantageous that during the gaze behaviour measurement many different gaze behaviours are elicited. In this way, the model fitted to the data will be able to describe a wide range of gaze behaviours of the observer which will include the behaviour adopted in visual tasks during the future usage of the lenses.

The visual viewing task during measurement does not necessarily need to resemble or even to be a viewing task that arises "naturally". Instead, it can be artificially generated if a wide range of different visual behaviours will be elicited during measurement. Thus, an aspect of the invention is to measure the gaze behaviour of the future wearer in an artificially generated viewing task, also referred to as visual task herein, that elicits a wide range of visual behaviours.

In embodiments, this is done by the visual task of following a stimulus that moves along a stimulus trajectory that causes the observer to adopt a wide range of gaze behaviours. For example, such a trajectory can be generated to cover a wide range of different positions as well as a wide range of different velocities of the stimulus. This, in turn, may require the observer to use a wide range of head and eye amplitudes, and additionally, a wide range of head and eye velocities to be able to follow the stimulus.

To this end, the stimulus trajectory can be generated by simulating a random walk. For example, it can be calculated by successively adding position changes, starting from a given starting position. Suitable position changes are sampled from a random distribution, for example from a normal distribution or a linear combination of normal distributions.

Alternatively, instead of starting from an initial position and successively adding position changes, the stimulus trajectory can be calculated by successively subtracting random position changes from a given final position of the trajectory.

Alternatively, also the simulation can be started from an intermediate position, both in positive and negative time directions by concatenating a trajectory part calculated to have a final position given by the intermediate position with a trajectory generated to have the starting position given by the same intermediate position.

While starting from a given starting position is advantageous to start with the stimulus motion in a defined position in a region visible to the observer, it may be advantageous to stop the stimulus motion at a given final position, for example to allow for direct interactions between the stimulus and the observer, for example touching the stimulus. It can be thus desirable to use trajectories with a defined starting and final position. To this end, an initial trajectory, ($x_0^{ini}, x_1^{ini}, \ldots, x_N^{ini}$), is simulated (for example starting from the starting point $x_0^{ini} = x_0$ specified). Then, the $i$-th point of the trajectory, $x_i$ is calculated by shifting it by the fraction $i/N$ of the difference of the specified final stimulus position, $x_N$, and the initially simulated final position of the trajectory, $x_N^{ini}$:

$$x_i = x_i^{ini} + \frac{i}{N}\left(x_N - x_N^{ini}\right)$$

This is equivalent to shifting the expectation value of the distribution of random stimulus position changes by an amount defined such that it is the difference between the initially simulated and the desired final stimulus position divided by the number of steps of the trajectory. It is obvious that the initial and final points and the direction of time in the simulation method above can be interchanged to obtain the same result.

The random distribution of the position changes has preferably the expectation value of (0,0,0), unless the trajectory is simulated between two given positions as described above, in which case the expectation value does not really matter since it will be replaced after the initial simulation.

After simulation, the trajectory may be smoothed additionally to generate smoother movement of the stimulus. Some of many possibilities are smoothing the stimulus position by a moving window average, by a smoothing spline, or by using correlated random numbers (e.g. a Gaussian process) to increment the stimulus position during simulation of the trajectory.

The covariance of the distribution of stimulus position changes is preferably chosen such that the angular velocity of the stimulus observed from the position of the observer has a desired distribution. Particularly, a desired range of the root-mean-squared (abbreviated as RMS) velocity can be specified. Preferable RMS velocity lower bound values are 0°/second, and preferable RMS velocity upper bound values are between 1°/second (slow motion) and 5°/second (fast motion). In the simplest way, the adjustment can be done iteratively, for example by realising that the angular velocity range can be adjusted by increasing / decreasing the covariance of the random distribution of position changes to increase / decrease the RMS angular velocity.

To guarantee that the stimulus velocities will not exceed pre-defined permissible values, the random distribution of position increments may be truncated above a given threshold. The threshold can be for example chosen such that the angular velocity will not exceed 100° per time step of the trajectory, or, alternatively by 100°/second, both of which might be hard to follow.

Advantageously, the random walk is generated in transformed position coordinates. For example, in a coordinate system in which the direction of the stimulus is encoded by a unit vector on a sphere, and the distance is encoded by the reciprocal value of the distance from the stimulus to the observer. In that case, the random distribution to sample changes stimulus direction changes from is a random distribution on a sphere, for example the Mises-Fisher distribution, or a projected normal distribution (projected along the radius of the sphere). This ensures that the stimulus spends comparable amounts of time along different angular positions (i.e. directions) and reciprocal distances.

Advantageously, the trajectory of the stimulus can be confined to a pre-set confinement region by simulating a constrained random walk, for example by using reflecting boundaries that reflect simulated stimulus positions that are outside of a confinement region into its interior. This can be done while the random walk is calculated by reflecting the position at the boundary of the confinement region back into the inside of the region as soon as the position of the stimulus would cross the boundary of the confinement region. Other means to satisfy the constraints are to take a trajectory simulated with an unconstrained random walk, to detect all parts of the trajectory that are outside of the confinement region, and to replace these parts by reflecting them at the boundaries of the confinement region. The confinement region may be for example a box or an ellipsoid extending from -60° (left) to +60° (right) for horizontal stimulus directions, -45° (down) to +30° (up) in the vertical stimulus direction, and 0.2/m to 2.5/m along the reciprocal distance of the stimulus to the observer.

Advantageously, the stimulus trajectory is self-avoiding, and the simulated random walk is a self-avoiding random walk. The self-avoiding property can refer to either the stimulus position or to the stimulus velocity, and preferably to the combination of stimulus position and velocity. In the latter preferable embodiment, the stimulus can still pass through the same position if its velocity is different and can have also the same velocities at different positions.

To generate even more unexpected stimulus motion and trigger an even wider range of gaze behaviour, distributions with wide tails can be used to sample the changes of stimulus position. For example, a mixture of two normal distributions can be used, in which the component with larger variance has a lower mixture probability (for example a probability that causes the component with the larger variance to be sampled between 0 and 0.2 times per second) and generates infrequent but usually large (for example above 5°/second) position changes, whereas the component with the smaller covariance has a high mixture probability (for example 0.8 to 1) and generates small (for example below 5°/second) position changes frequently.

It is also possible to simulate several trajectories and to pick only those that satisfy certain criteria like criteria of homogeneity of stimulus position and/or criteria of homogeneity of stimulus velocities. This can be done by calculating a property of the stimulus trajectory and using only the trajectories that satisfy the criterion by being below or above a pre-defined threshold. For example, the entropy of a histogram calculated from the stimulus positions and / or stimulus velocities can be used to check whether a homogeneity criterion is satisfied by requiring the entropy to be above a specified value. To this end, the histogram(s) must be calculated for a fixed predefined range of positions and/or velocities. Other criteria used alternatively or in addition may ensure that all positions and/or velocities are in their respective permissible ranges.

In general, a motion-related gaze behaviour model can be considered to generalise well from the task upon which it was trained (measurement viewing task) to another task (target viewing task) when the model is able to predict the viewing behaviour of the observer recorded during the measurement viewing task, and when the model is able to predict the viewing behaviour of the observer during a target viewing task only slightly worse than its ability to predict the visual behaviour during the measurement viewing task.

More precisely, a motion-related gaze behaviour model can be considered to generalise well from the measurement viewing task to the target viewing task when a total $R^2$ value defined as the difference of 1 and the ratio of

- the sum over modelled gaze properties of the test mean squared errors of the modelled gaze properties evaluated on a test data set measured when the observer performed the measurement viewing task, and
- the sum over modelled gaze properties of the variance of the modelled gaze properties evaluated on the test data set measured when the observer performed the measurement viewing task,

  is above 0.5, preferably above 0.7, and even more preferably above 0.9, and/or when a prediction quality deterioration parameter $Q$ defined as the ratio of

  - the sum over modelled gaze properties of the mean squared errors of the modelled gaze properties evaluated on a data set measured when the observer performed the target viewing task, and

- the sum over modelled gaze properties of the mean squared errors of the modelled gaze properties evaluated on the data set while the observer performed the measurement viewing task

is lower than 2, preferably lower than 1.4, more preferably lower than 1.2, and even more preferably lower than 1.1.

**Stimulus Visibility**

To ensure that the stimulus is visible well in all distances, i.e. that it is not too small to be easily visible at far distances and not too large to represent a well-defined and unique fixation mark at close distances, its size may be controlled depending on the distance from the observer. For example, the absolute size of the stimulus may be varied such that its angular size as observed by the observer is constant for different distances. This is done by scaling the absolute size of the stimulus, *s*, proportionally with the distance to the observer. This can be accomplished for example with

$$s(d) = d \tan \frac{\alpha}{2},$$

where s(d) is the object size (for example the diameter of a sphere shown) that is dependent on the distance d from the position of the stimulus (e.g. its centre of mass, or preferably the point closest to the observer, or even more preferably the point currently fixated by the observer) to the position of the observer (for example the centre of mass of the head, or the centre of mass of the pupil positions measured with an eye tracker, the centre of mass of the approximate centre of rotation of the eyes). The angular size of the stimulus may be denoted by $\alpha$ and may be chosen such the stimulus is easily visible (for example at least 0.5°, 1° or 2°) but not too large (not larger than 10°, 5°, or 2°) for an emmetropic observer.

Since the observer might consider stimuli of constant angular size as unrealistic, especially when the stimulus resembles a real object, the stimulus size may be calculated differently depending on the distance of the stimulus to the observer. For example, the angular stimulus size may be held constant or approximately constant at an angular size $\alpha_{max}$ when the distance of the stimulus to the observer is below a given minimum distance $d_{min}$, and/or it may be kept constant at an angular size of $\alpha_{min}$ or approximately constant when the stimulus distance is above a given maximum distance $d_{max}$, while for stimulus distances between $d_{min}$ and $d_{max}$ the absolute stimulus size is interpolated based on the distance between the observer and the stimulus.

Preferably, the absolute stimulus size for distances between $d_{min}$ and $d_{max}$ is constant.

Alternatively, or in certain distance ranges (for example for distances below $d_{min}$ and above $d_{max}$), the angular size may be controlled such that the angular size of the stimulus decreases / increases less than the angular size of a stimulus with a constant absolute size would decrease / increase when the stimulus moves farther away / comes closer. This can be done for example with a power law,

$$s(d) = \left(\frac{d}{d_0}\right)^\lambda d_0 \tan \frac{\alpha_0}{2}$$

where $\alpha_0$ is the angular stimulus size when the stimulus is at the distance $d_0$, and $\lambda$ is an exponent between 0 and 1. An exponent of $\lambda = 1$ will create a behaviour of constant angular size, while $\lambda = 0$ will create a stimulus with a realistic scaling behaviour with the distance. A good choice is an exponent between 0.3 and 0.7.

The desired angular size of the stimulus may be calculated as a function of the possibly not corrected ametropia or residual ametropia and/or pupil diameter of the observer if it is known before the measurement so that the stimulus is easily visible even to observers who are ametropic while being measured. The angular size of the stimulus can be set to be the larger, the larger the ametropia or residual ametropia of the observer is. For example, it can be set to have an affine dependence on the absolute value of the spherical equivalent of the ametropia, or preferably, affinely dependent on the dioptric distance of the ametropia. Alternatively, the angular size of the stimulus can be set to have an affine dependence on the pupil diameter of the observer, for example to the currently measured pupil diameter, or preferably to the pupil diameter averaged over a given time scale, for example over at least 2 seconds. Advantageously, the angular size of the stimulus is set to have an affine dependence on the product of both, the ametropia or residual ametropia of the observer, and to the diameter of the pupil of the observer. The angular size of the stimulus may thus be calculated as

$$\alpha = \alpha_{emm} + \beta r \Delta P$$

where $\alpha_{emm}$ is the angular stimulus size to be perceived by emmetropic observers, $\Delta P$ is the dioptric distance, r is the pupil radius (defined as half of the diameter of the pupil), and $\beta$ is a constant. Preferably, the term $\beta r \Delta P$ corresponds to the

difference of the largest diameter of the point spread function of the (possibly ametropic) observer and the diameter of the point spread function of an emmetropic observer, both with the pupil radius r. Alternatively, the constant $\beta$ can be chosen experimentally (and without the need to calculate point spread functions) such that a strongly ametropic observer can still localise the centre of the stimulus well.

**Selection of Usage Situations**

In any of the embodiments of the invention, the viewing task or the viewing tasks performed during future wear of the lenses to be determined may be reading a book, reading a newspaper, walking, using stairs, riding a bicycle, doing various sports, using desktop computers, laptops or mobile devices, watching TV, shopping, cooking, or other common activities. The latter may be selected and/or weighted by the wearer of the future lenses.

**Detailed descriptions of figures and related embodiments**

**Figure 2A** shows in a plot the nonlinear transformation of anisotropic gaze motion behaviour model parameters for several observers. The gaze motion parameters, also referred to as viewing behaviour model parameters, $\theta\left[\omega_x^{E|H}:\omega_x^{G|W}\right]$ and $\theta\left[\omega_y^{E|H}:\left(\omega_y^{G|W} r_y^{H|W}\right)\right]$ are shown for measurements evoked by random stimulus motion. The values were obtained from measurements of five different observers. The measurement results for a single of the five different observers are clustered and marked with ellipses, respectively. The observers A, B, and C of whom the values were already measured and shown in Figs. 1A to 1C are labelled with A, B and C in Fig. ,2 respectively.

The shape of the data points corresponds to different stimulus traces used for the stimulus to move along. Each type of trace was mirrored along the y-z plane in world coordinates, and two measurements were obtained with each of the mirrored and original stimulus traces.

**Figure 2B** shows in a plot the values of the parameters $\phi_{hor}^{(\Delta t)}$ and $\phi_{ver}^{(\Delta t)}$ of time-delayed eye motion and head motion responses in horizontal and vertical directions from example model 2 according to the second definition (summarised motion response of eyes and head). The values were obtained from measurements of the same five different observers as in Fig. 2A. Herein, the data are well clustered and the data of all of the five observers can be easily separated from each other. Therefore, the dashed ellipses identifying the different observer data do not intersect.

**Figures 2C, 2D, and 2E** show in respective plots the values of the response parameter $\phi_{cmb}$ of combined eye motion and head motion response, and the parameters $\phi_{hor}^{(\Delta t)}$ and $\phi_{ver}^{(\Delta t)}$ of time-delayed eye and head motion response in horizontal and vertical directions, for the same measurements as Figure 2A, but according to the third definition (with normalisation) from example model 2. The observers from Figures 1A to 1C are labelled with A, B and C respectively. All observers can be well separated since at least in one of the views the ellipses do not intersect. The best separation in a 2-dimensional subspace is achieved with the combination of the lens design parameters $\phi_{cmb}$ and $\phi_{hor}^{(\Delta t)}$ in Fig. 2D, in which the ellipses have the largest distances from each other and are small in comparison to the total variation of the parameters.

**Figure 3** shows the nonlinear transformation of anisotropic gaze motion behaviour model parameters for 19 different observers which are also different from the observers measured in Fig. 1A-C and in Fig. 2A-E. The lens design parameters $\phi_{hor}^{(y)}$ and $\phi_{cmb}$ were calculated from the responses of the head and eye velocity on the gaze velocity, evoked by random stimulus motion. The observers are labelled with numbers 1-19.

**Figure 4** shows the gaze motion behaviour model parameter from Figure 3 mapped to alternative design parameters $\phi_F$, $\phi_I$, and $\phi_N$ of progressive spectacle lenses, which form a barycentric coordinate system, the so-called design characteristic. Here, the design characteristic components of the far, intermediate and near viewing zone are referred to by $\phi_F$, $\phi_I$, and $\phi_N$, respectively. The observers are labelled with numbers 1-19. For description of the lens design assignment dependent on the parameter space see Figure 5 of this document, or Figure 1 and Table 2 found in Forkel & Reiniger, et al., Optom Vis Sci. 2017 Feb;94(2):208-218. doi: 10.1097/OPX.0000000000001016.

**Figure 5** shows a continuum of progressive lens designs available by varying the design characteristics parameters ($\phi_F$, $\phi_I$, $\phi_N$), which are essentially barycentric coordinates, as shown in in bottom right subfigure. The lens design space is defined by the different lens designs N, I, F, C, and D. The lens designs N, I, F, C, and D are know and established lens designs of progressive lenses. Iso-astigmatism lines and power addition profiles along the principal viewing line, shown as solid black lines in Fig. 5 are shown for lenses with so-called "base designs" N, I, F, C, and D in standard wearing conditions for personalised lenses (abbreviated as PER) with plano far refraction and an addition of 2 dioptres.

For comparison, iso-astigmatism lines and power addition profiles are shown also for a conventional lens (abbreviated as CNV) with the same refraction and addition. Designs close to the lends design "C" are designs with balanced astigmatism gradients, the progressive lens designs close to the labels "D" and "I" have low overall astigmatism gradients, whereas the designs close to the labels "N" and "F" have higher overall astigmatism gradients.

The horizontal astigmatism gradients of the lens designs N, I, F, C, and D in the far and near viewing zones differ as well: there are very low horizontal astigmatism gradients in the far viewing zone for designs close to the labels "F" and "D", whereas for designs close to the labels "C", "I" and "N" the horizontal astigmatism gradients in the far viewing zone are stronger, with the design "N" having the strongest horizontal astigmatism gradients in the far viewing zone. In the near viewing zone, designs close to the label "N" have the lowest horizontal astigmatism gradients. The horizontal astigmatism gradients become gradually stronger for designs close to the labels "I", "C", "D", and "F".

In embodiments of the invention, gaze motion data of an observer is detected and the information about the angular velocities of the eyes, the head and the gaze are obtained. The parameters of a motion-related gaze behaviour model, in particular an anisotropic one, are determined by modelling at least one of the angular velocities (similar to the modelling results shown in Figs. 1A to 1C). Based on the model parameters (also referred to as gaze motion parameters), in particular anisotropic ones, first lens design parameters are calculated, similar to the data shown in Figs. 2A to 2E. These first lens design parameters can then be further transformed to calculate second lens design parameters, for example the lens design parameters shown in Fig. 3 or 4. As shown in Fig. 4, the resulting lens design parameters may be arranged within a lens design space defined by a plurality of known lens designs, e.g., the lens designs N, I, F, C, and D shown in Fig. 5. Depending on the resulting position within the lens design space, a lens design is chosen as specific lens design that may be a weighted interpolation of the known lens designs of the lens design space, similar as the position shown in Fig. 4. In total, the calculation of the final lens design parameters from the gaze motion data or the gaze motion parameters obtained from the gaze motion data may be considered a mapping function of the gaze motion data to a specific lens design.

The resulting specific lens design may then be further adapted according to classic centring parameters like the distance between the pupils, the inclination of the frame, etc., and a spectacle lens for the observer may be produced according to the adapted specific lens design.

**Claims**

1. Method for calculating and/or optimizing and/or producing individual spectacle lenses, comprising the steps:

   - showing a visual scene to a lens wearer;
   - obtaining gaze motion data comprising information about a velocity of an eye direction and/or a velocity of the head of the lens wearer and/or a velocity of a fixation position of the gaze of the lens wearer;
   - mapping the obtained gaze motion data to a specific lens design for the lens wearer by means of a mapping function; and
   - providing lens design information for producing a spectacle lens for the lens wearer according to the specific lens design.

2. Method according to claim 1, wherein:

   - the gaze motion data comprises information about at least two of the velocities, namely about two velocities of the three velocities of the eye direction, the head direction, and the fixation position;
   - the gaze motion data comprises information about a relation between these two velocities; and
   - the mapping of the obtained gaze motion data to the specific lens design depends on the information about the relation of these two velocities.

3. Method according to claim 1 or 2, comprising extracting an approximate functional relation between at least one of the two velocities, including the velocity of an eye direction and the velocity of the head of the lens wearer, and the velocity of a fixation position of the gaze of the lens wearer, wherein the mapping of the obtained gaze motion data to the specific lens design depends on the extracted functional relation of these two velocities.

4. Method according to any one of the preceding claims, wherein the visual scene shown to the lens wearer comprises at least one moving stimulus to be fixated by the lens wearer, and wherein the gaze motion data is obtained for at least one viewing task during which the fixation position of the lens wearer is tracked and/or during which the position of the moving stimulus is known or is recorded, while the stimulus moves along a testing path.

5. Method according to claim 4, wherein the gaze motion data further comprises information about at least one of:

- a position of the stimulus; and/or
- a direction of the stimulus; and/or
- a proximity of the stimulus to the lens wearer.

6. Method according to any one of the preceding claims, wherein:

   - a motion-related gaze behaviour model is established based on the obtained gaze motion data;
   - the motion-related gaze behaviour model is used to determine at least one gaze motion parameter describing the motion-related gaze behaviour of the lens wearer; and
   - at least one of the determined gaze motion parameters of the motion-related gaze behaviour model is used to map the at least one gaze motion parameter to the specific lens design.

7. Method according to the claim 6, wherein the motion-related gaze behaviour model is configured to further calculate lens wearer parameters of the gaze of the lens wearer, in particular the pupil size of the lens wearer. and/or
   wherein:

   - the motion-related gaze behaviour model is used to validate motion-related gaze behaviour of the lens wearer for a specific viewing task and to determine a predicted motion-related gaze behaviour for the specific viewing task;
   - said specific viewing task is then shown to the lens wearer by means of a moving stimulus as fixation position while obtaining the actual gaze motion data of the lens wearer fixating the stimulus; and
   - in case the actual gaze motion data are closer to the predicted motion-related gaze behaviour than a predetermined threshold, the specific lens design is chosen based on the current motion-related gaze behaviour model, otherwise, the motion-related gaze behaviour model is amended based on further obtained gaze motion data.

8. Method according to claim 6, or 7, wherein the motion-related gaze behaviour model is a trainable model that is trained with the obtained gaze motion data, wherein the gaze motion data is in particular obtained during a plurality of viewing tasks during which a moving stimulus as fixation position of the gaze of the lens wearer is moving while the lens wearer fixates the stimulus.

9. Method according to any one of the preceding claims, wherein the obtained gaze motion data is mapped to a specific lens design comprising specific lens design parameters, including, in particular, a specific progression length.

10. Method according to claim 6 and 9, wherein the mapping function maps at least one of the gaze motion parameters to the lens design parameters.

11. Method according to any one of the preceding claims, wherein the gaze motion data is obtained in both at least one horizontal direction and at least one vertical direction.

12. Method according to claim 6 and claim 11, wherein the motion-related gaze behaviour model is implemented as an anisotropic motion-related gaze behaviour model, and wherein the anisotropic gaze behaviour model is used to calculate at least one anisotropic gaze motion parameter describing the motion-related gaze behaviour of the lens wearer in an anisotropic manner.

13. Method according to any one of the preceding claims, wherein the gaze motion data is mapped to a weighted interpolation of at least two separate lens designs.

14. System for calculating and/or optimizing and/or producing individual spectacle lenses, comprising:

    - a display device configured to show a visual scene to a lens wearer;
    - an obtaining device configured to obtain gaze motion data comprising a velocity of an eye direction and/or a velocity of the head of the lens wearer and/or a velocity of a fixation position of the gaze of the lens wearer;
    - a mapping device configured to map the obtained gaze motion data to a specific lens design for the lens wearer; and
    - a providing device for providing lens design information for producing spectacle lenses for the lens wearer according to the specific lens design.

15. Computer program product for providing individual lens design data comprising a computer-readable storage medium storing one or more programs, the one or more programs comprising instructions that, when executed by at least one programmable processor, cause the at least one programmable processor to perform operations comprising:

- showing a visual scene to a lens wearer;
- obtaining gaze motion data comprising a velocity of an eye direction and/or a velocity of the head of the lens wearer and/or a velocity of a fixation position of the gaze of the lens wearer;
- mapping the obtained gaze motion data to a specific lens design for the lens wearer; and
- providing individual lens design data for producing spectacle lenses for the lens wearer according to the specific lens design.

Fig. 1A

Fig. 1B

Fig. 1C

Fig. 2A

Fig. 2B

Fig. 2E

Fig. 2D

Fig. 2C

Fig. 3

EP 4 764 669 A1

Fig. 4

Fig. 5

Europäisches
Patentamt
European
Patent Office
Office européen
des brevets

# EUROPEAN SEARCH REPORT

**Application Number**

EP 24 22 3010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 402 661 B2 (ESSILOR INT [FR]) 2 August 2022 (2022-08-02) * col. 2; col. 4, l. 41 - 50 and l. 64 - 67; col. 6, l. 30 - 35; col. 8, l. 5 - 12.; claim 1; figures 4A-4C, 5A-5C, 6A-6C, 7A - 7C * | 1-15 | INV. G02C7/02 G02C7/06 |
| A | US 2022/326543 A1 (SOLER MONENTE SANTIAGO [ES] ET AL) 13 October 2022 (2022-10-13) * the whole document * | 1-15 | |
| A | US 10 690 945 B2 (ESSILOR INT [FR]) 23 June 2020 (2020-06-23) * the whole document * | 1-15 | |
| A | US 2018/310820 A1 (ESCALIER GUILHEM [FR] ET AL) 1 November 2018 (2018-11-01) * the whole document * | 1-15 | |
| A | WO 2024/192245 A1 (INDIZEN OPTICAL TECH S L [US]) 19 September 2024 (2024-09-19) * the whole document * | 1-15 | TECHNICAL FIELDS SEARCHED (IPC) G02C |

The present search report has been drawn up for all claims

| Place of search | Date of completion of the search | Examiner |
|---|---|---|
| Munich | 6 June 2025 | Toccafondo, Iacopo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 3010

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | | Publication date | Patent family member(s) | | Publication date |
|---|---|---|---|---|---|
| US 11402661 | B2 | 02-08-2022 | BR | 112018013546 A2 | 04-12-2018 |
| | | | CA | 3012278 A1 | 21-09-2017 |
| | | | CN | 108474970 A | 31-08-2018 |
| | | | EP | 3430468 A1 | 23-01-2019 |
| | | | US | 2019113770 A1 | 18-04-2019 |
| | | | WO | 2017157760 A1 | 21-09-2017 |
| US 2022326543 | A1 | 13-10-2022 | EP | 4071543 A1 | 12-10-2022 |
| | | | ES | 2993592 T3 | 02-01-2025 |
| | | | US | 2022326543 A1 | 13-10-2022 |
| US 10690945 | B2 | 23-06-2020 | CN | 106030382 A | 12-10-2016 |
| | | | EP | 3108295 A1 | 28-12-2016 |
| | | | JP | 6854647 B2 | 07-04-2021 |
| | | | JP | 2017507370 A | 16-03-2017 |
| | | | US | 2017059886 A1 | 02-03-2017 |
| | | | WO | 2015124574 A1 | 27-08-2015 |
| US 2018310820 | A1 | 01-11-2018 | BR | 112018007182 A2 | 16-10-2018 |
| | | | CA | 3001824 A1 | 20-04-2017 |
| | | | CN | 108135465 A | 08-06-2018 |
| | | | EP | 3361929 A1 | 22-08-2018 |
| | | | FR | 3042400 A1 | 21-04-2017 |
| | | | JP | 7048489 B2 | 05-04-2022 |
| | | | JP | 7263474 B2 | 24-04-2023 |
| | | | JP | 2018535730 A | 06-12-2018 |
| | | | JP | 2022002761 A | 11-01-2022 |
| | | | US | 2018310820 A1 | 01-11-2018 |
| | | | WO | 2017064441 A1 | 20-04-2017 |
| WO 2024192245 | A1 | 19-09-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1959294 A2

**Non-patent literature cited in the description**

- **FORKEL**; **REINIGER et al.** *Optom Vis Sci.*, February 2017, vol. 94 (2), 208-218